# EUROPEAN PATENT APPLICATION

(11) **EP 1 475 949 A1**
(43) Date of publication of application: **10.11.2004**
(21) Application number: 04019041.5
(22) Date of filing: 26.07.2001
(51) Int. Cl.: H04N 1/10

(54) **Sort card to divide slide mounts in an image scanning apparatus**

(30) Priority: 27.07.2000 JP 2000227717; 11.09.2000 JP 2000275117; 11.09.2000 JP 2000275118; 20.06.2001 JP 2001187121
(62) Divisional of application: 01118151.8
(71) Applicant: Fuji Photo Film Co., Ltd., Kanagawa (JP)
(72) Inventor: Sakaguchi, Yasunobu c/o Fuji Photo Film Co., Ltd., Kanagawa (JP); Tsuji, Junichi c/o Fuji Photo Film Co., Ltd., Kanagawa (JP)
(74) Representative: Klunker . Schmitt-Nilson . Hirsch

(57) **Abstract**

A sort card (34,93,94,95) for dividing slide mounts (17,91) for each order has identification openings (34a,93a,94a,95a). The identification openings (34a,93a,94a,95a) are formed in the middle of all sides in order to detect the sort card (34,93,94,95) even when the sort card (34,93,94,95) is turned over or loaded in incorrect orientation direction.

## Description

### BACKGROUND OF THE INVENTION

### 1. Field of the Invention

The present invention relates to a film carrier for conveying a slide mount, a method and an apparatus for scanning an image in the slide mount which is loaded in the film carrier, and a sort card for dividing plural slide mounts for each order.

### 2. Background Arts

There is a digital laboratory system, in which an image scanner and a digital printer is provided. An image on a photo film is scanned by use of the image scanner, to obtain digitalized image data. Image data is sent to the digital printer after various image data processing, and is used to record the image on a photographic paper. After image recording, development and fixation processes are carried out, to obtain a print picture. In the image scan operation, scan light is projected to the photo film. And the film image is obtained by detecting transmitted scan light amount by use of a CCD image sensor. Such image scanning apparatuses are disclosed in JP-A 49-39429, 2-309344, 11-8730 and 11-112714, for instance.

JP-A 11-112714 discloses a film carrier for holding and feeding a slide mount to scan the image. The slide mount is comprised of a single frame of the photo film and a frame body for holding the marginal area of the photo film. A plurality of the slide mounts are stacked in a mount supply cartridge of the film carrier, and are conveyed in a sub-scan direction one by one. At first, the image on the photo film is pre-scanned at a low resolution. Then, scanning conditions (intensity of scan light, charge storage time of the CCD image sensor and so forth) are determined according to the characteristics of a pre-scanned image, such as densities and color balances. Afterward, a fine-scan is carried out by scanning the image at a high resolution under the determined scan condition. During the pre-scan and the fine-scan, the image on the photo film is scanned while a mount holder for holding the slide mount is conveyed in a sub-scan direction at a predetermined speed. After the fine-scan, the slide mount is transferred to a mount collection cartridge of the film carrier and contained therein.

The thickness of the slide mount is different in accordance with manufacturers, so the level of the emulsion surface of the photo film from the film passage is varied according to the kind of the slide mount. In order to prevent out of focus, focusing operation is required before scan operation. As set above, however, the pre-scan and the fine-scan are carried out during one scan operation, and focusing operation in each scanning fails efficient image scanning.

The above image scanning apparatus measures scan conditions in the fine-scanning on the basis of condition data obtained by use of pre-scanned image. Certain calculation time is needed for measuring the scan condition. Moreover, since the image scanning apparatus of an exclusive type has to scan the large amount of the slide mounts, it is needed to scan the image as fast as possible. In the conventional image scanning apparatus, however, making the most of the scan condition measurement time is not considered, which causes inconvenience in image scan operation.

The mount holder is moved with high precision during the pre-scanning and the fine-scanning, so it is not preferable to combine other moving mechanism with the mount holder moving mechanism. Thus, the moving mechanism for supplying and ejecting the slide mount is provided on the mount holder. In that case, structure of the carrier body becomes complicated, which causes high manufacturing cost. So a simple feeding mechanism has been required.

On the other hand, JP-A 60-11826 discloses a dummy slide for dividing plural slide mounts for each order. The dummy slide is loaded in a position between a last slide mount of an order and a first one of the next order. The dummy slide has a photo film with no image for distinguishing the slide mount. In addition, identification information, such as color, mark and character, is recorded on the photo film or the frame body, to identify the slide mounts for each order. JP-A 61-42638 discloses a sort card with marks for distinguishing slide mounts of different orders. On the sort card is pierced data pit for confirming each order.

However, the dummy slide and the sort card are not detected when being stacked in incorrect orientation direction. In that case, it is impossible to discriminate the slide mounts for each order.

### SUMMARY OF THE INVENTION

In view of the foregoing, an object of the present invention is to provide a film carrier for transferring a slide mount by use of simple structure.

Another object of the present invention is to provide a method and an apparatus for scanning image which are capable of efficient image scanning of the slide mount loaded in the film carrier.

Another object of the present invention is to provide a sort card to ensure to detect the different orders regardless of orientation direction thereof.

To achieve the above objects, a method for scanning an image of the present invention is comprised of the following steps : moving the slide mount and performing a pre-scan to scan the image at a low resolution while the original passes a scan position of the scanner; performing a focusing operation of the scanner when a portion of the original is kept at the scan position after the pre-scan; and moving the slide mount after the focusing operation and performing a fine-scan to scan the image at a high resolution while the original passes the scan position of the scanner. The scan condition for the fine-scan can be determined based on image data obtained by the pre-scan in the period between the pre-scan and the fine-scan. Since the calculation for measuring the scan condition is carried out in the period of the focusing operation, it is possible to shorten the whole scan time. Thus, an effective image scanning can be realized.

In a preferable embodiment, the pre-scan is carried out in conveyance of the slide mount from a first position to a second position, the focusing operation is carried out while the slide mount is temporarily stopped in the conveyance of the slide mount from the second position to the first position, the slide mount is fed to the first position after the focusing operation, and the fine-scan is carried out in the conveyance of the slide mount from the first position to the second position. It is possible to carry out the focusing operation prior to the pre-scan.

The slide mount is conveyed by the film carrier, which is comprised of a movable stage for holding the slide mount, a stage moving mechanism for moving the movable stage between a receive position and a collection position, a mount supply section for supplying the slide mount to the movable stage which is located at the receive position, a mount collection section for receiving the slide mount from the movable stage which is located at the collection position, a mount set section for holding the slide mount sent from the mount supply section at a holding position on the movable stage, and a mount ejection section for feeding said slide mount to the mount collection section. The mount set section has mount feeding means whose driving power is transmitted from either the mount supply section or the mount collection section, so it is possible to omit the driving mechanism to feed the slide mount on the movable stage.

The slide mounts are divided by a sort card for each order. In detecting the sort card, the sort card is conveyed to the mount collection section without carrying out the pre-scan and the fine-scan. The sort card has a plurality of identification openings for distinguishing the sort card from the slide mount, and the identification openings are positioned so as to be the same location in the sort card even when the sort card is turned over or rotated around 90 degrees from a correct orientation direction. Thus, it is possible to ensure to detect the sort card, regardless of the orientation direction of the sort card.

For shortening the whole scan time, it is possible to perform the focusing operation only to a first slide mount after detecting the sort card, and not to perform the focusing operation until the next sort card is detected.

### BRIEF DESCRIPTION OF THE DRAWINGS

The above and other objects and advantages of the present invention will become apparent from the following detailed description of the preferred embodiments when read in association with the accompanying drawings, which are given by way of illustration only and thus are not limiting the present invention. In the drawings, like reference numerals designate like or corresponding parts throughout the several views, and wherein:
FIG. 1 is a block diagram of a digital laboratory system with a image scanning apparatus of the present invention;
FIG. 2 is a perspective view of a linear CCD scanner;
FIG. 3 is a perspective view of a film carrier;
FIG. 4A is a perspective view of a sort card;
FIG. 4B is a perspective view of a slide mount for holding ISO 135 type photo film;
FIG. 4C is a perspective view of a slide mount for holding IX240 type photo film;
FIG. 5 is a front elevation view of an inner structure of the film carrier;
FIG. 6 is a top plan view of an inner structure of the film carrier;
FIG. 7 is a partial sectional view of the sort card and a first and second photo sensors;
FIG. 8 is an explanatory view of detection of the slide mount with correct and incorrect orientation direction, and detection of the sort card;

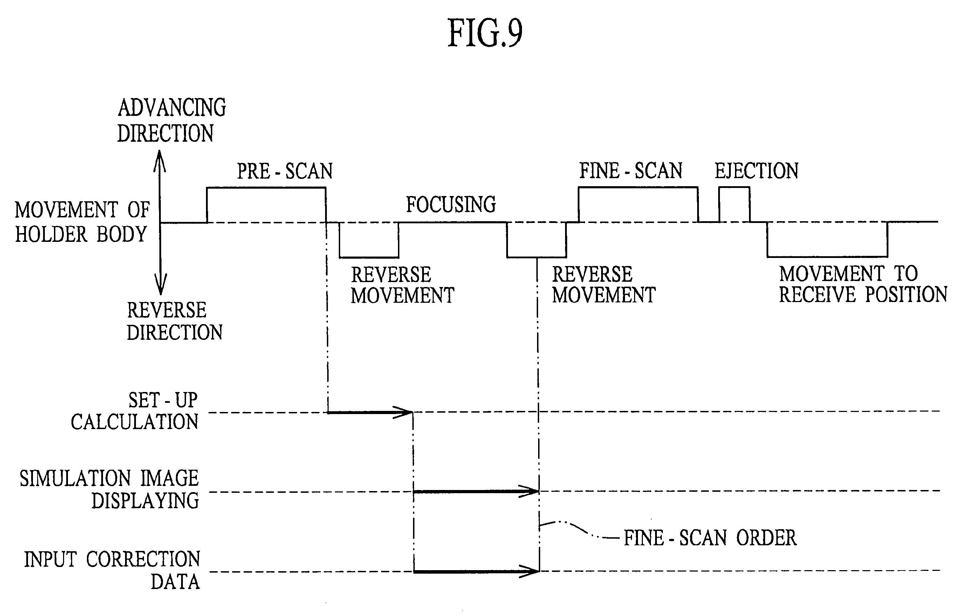

FIG. 9 is a time chart of movement of a mount holder, a set-up calculation, simulation image displaying and correction data input operation;
FIG. 10 is an exploded perspective view of a mount positioning section of the film carrier;
FIGS. 11 and 12 are flow charts showing an image scan operation;
FIG. 13 is a timing chart of the image scan operation;
FIG. 14 is a timing chart of a sort card feeding operation;
FIG. 15A is an explanatory view showing movement of the mount holder in the image scan operation;
FIG. 15B is an explanatory view showing movement of the mount holder in the sort card feeding operation;
FIG. 16 is an explanatory view of a state of a mount positioning section before conveyance of the slide mount;
FIG. 17 is an explanatory view of a state of a mount positioning section at the beginning of conveyance of the slide mount;
FIG. 18 is an explanatory view of a state of a mount positioning section during conveyance of the slide mount;
FIG. 19 is an explanatory view of a state of a mount positioning section just before the slide mount is holded on the film carrier;
FIG. 20 is an explanatory view of a mount positioning section in a state where the slide mount is holded on the mount holder;
FIG. 21 is an explanatory view of a mount positioning section which is conveyed toward a mount collection unit;
FIG. 22 is an explanatory view of a state of a mount positioning section in which the mount holder is at an ejection position;
FIG. 23A is an explanatory view showing the second embodiment of movement of the mount holder in scanning a first slide mount;
FIG. 23B is an explanatory view similar to FIG. 23A, but in scanning a second slide mount or more;
FIG. 24A is an explanatory view showing the third embodiment of movement of the mount holder in scanning a first slide mount;
FIG. 24B is an explanatory view similar to FIG. 24A, but in scanning a second slide mount or more;
FIG. 25A is an explanatory view showing the fourth embodiment of movement of the mount holder in the image scan operation;
FIG. 25B is an explanatory view showing the sixth embodiment of movement of the mount holder in the image scan operation;
FIG. 25C is an explanatory view showing the seventh embodiment of movement of the mount holder in the image scan operation; and
FIGS. 26 to 28 are top plan views showing other examples of the sort cards.

### DETAILED DESCRIPTION OF THE EMBODIMENT

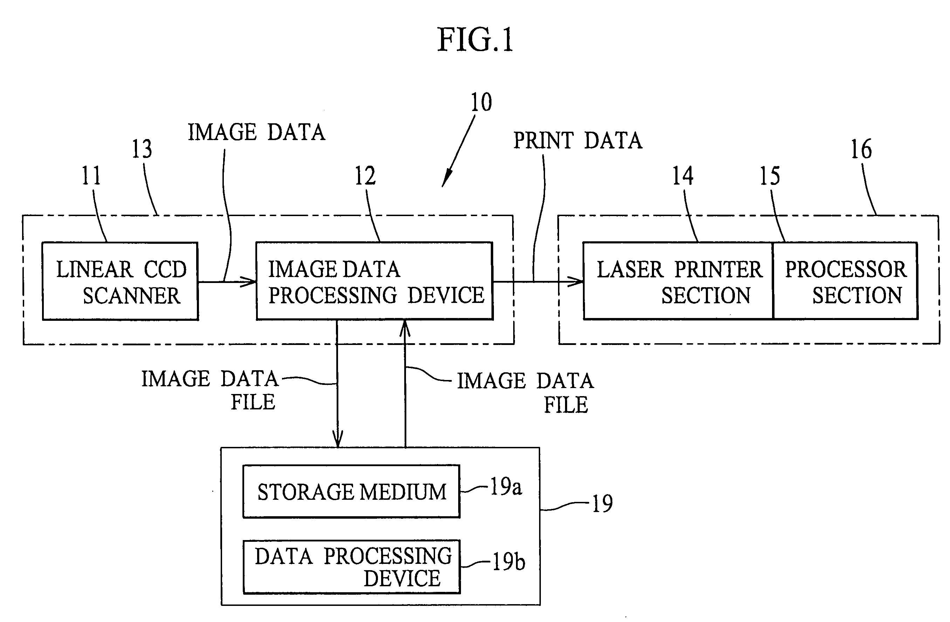

As shown in FIG. 1, a digital laboratory system 10 has an image scan apparatus 13 and an image print apparatus 16. The image scan apparatus 13 is consisted of a linear CCD scanner 11 and an image data processing device 12, and the image print apparatus 16 is consisted of a laser printer section 14 and a processor section 15.

The linear CCD scanner 11 includes a CCD image sensor for scanning an image on a photo film to obtain image data. The linear CCD scanner 11 can scan various kinds of the photo films, such as ISO 135 type photo film, IX240 type photo film, 110 size photo film, Brownie films of 120 type and 220 type, and so forth. The line CCD scanner 11 is able to scan an image on a reversal film as well as a negative film. The photo film is held in a slide mount 17, which is loaded in an exclusive film carrier 18.

Image data obtained by an image scan is sent to the image data processing device 12, which carries out various image processing, including gray-balance control, gradation correction, density (brightness) control, hue correction, and matrix operation for correcting difference in characteristics of the scan light source. If necessary, the image data processing device 12 can perform electrical magnification change process, compression/extension process of the density dynamic range, sharpening process and so forth. These image processing is carried out by use of low-pass filter, adder, look-up table (LUT), conversion matrix and so forth, or by combining them to perform averaging and interpolation calculation.

After these processes, the image data processing device 12 sends processed image data to the laser printer section 14 as print data. The image data processing device 12 can produce image files from processed image data, and output the image files to external devices 19. For instance, the image files are stored in a storage medium 19a like a memory card, a CD-ROM and so on. Moreover, the image files may be sent to an external data processing device 19b via a communication circuit.

The laser printer section 14 includes laser devices or red, green and blue, and a modulator. Based on the print data from the image scan apparatus 13, intensities of the laser beams from the laser devices are modulated. And the modulated laser beams are applied onto a photographic paper in a line-sequential manner, to record a latent image thereto. The processor section 15 carries out development, fixation, washing and drying processes to the exposed photographic paper. Thereby, a latent image is developed into a positive image, to obtain a print picture.

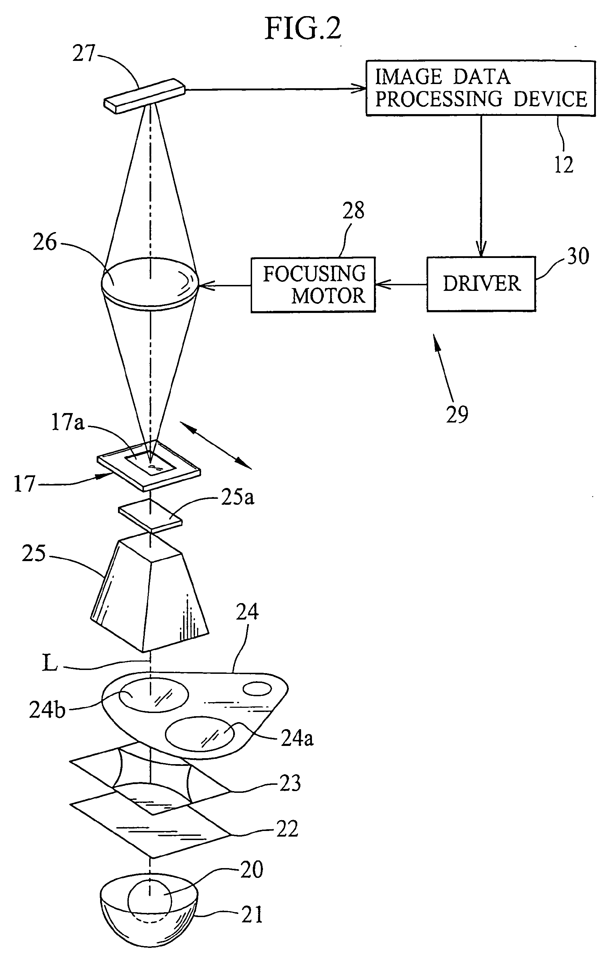

FIG. 2 shows an optical system of the linear CCD scanner 11. The optical system includes a scan light source 20 for emitting scan light, such as a metal halide lamp, a halogen lamp, a light emission diode (LED), or the like. The scan light source 20 is partially covered with a reflector 21, which is made of a material with permeability of infrared light and has a parabolic reflection surface. The scan light from the scan light source 20 is reflected by the reflector 21, and emitted toward the slide mount 17.

Between the scan light source 20 and the slide mount 17, there are an infrared cut filter 22, a light amount adjustment plate 23, a color temperature adjustment filter 24, a light diffusion box 25 and a light diffusion plate 25a, which are arranged along an scan light axis L in this order listed from the scan light source 20 side. It is possible to change light amount of the scan light by moving an insertion position of the light amount adjustment plate 23. The color temperature adjustment filter 24 includes a negative film filter 24a and a reversal film filter 24b, one of which is selectively inserted on the scan light axis L.

In the opposite side of the scan light source 20 with respect to the slide mount 17 are provided a focusing lens unit 26 and a CCD image sensor 27. An optical image on the photo film 17a, held in the slide mount 17, is focused on a photo receiving surface of the CCD image sensor 27 through the focusing lens unit 26. The focusing operation is carried out by driving a focusing motor 28 to move the focusing lens 26 along the scan light axis L. In FIG. 2, the focusing lens unit 26 of a single lens element is depicted, but a zoom lens with plural lens elements is applicable.

The CCD image sensor 27 has a red CCD cell array, a green CCD cell array and a blue CCD cell array, which are arranged at certain intervals in a sub-scan direction to convey the slide mount 17. Each of the CCD cell arrays has a plurality of CCD cells arranged in line along a main-scan direction perpendicular to the sub-scan direction. When a linear image in the photo film 17a is at a scan position to be overlapped with the scan light axis L, the linear image is scanned by the CCD image sensor 27. In this way, an optical film image is scanned by the linear CCD cell arrays line by line while the slide mount 17 is moved in the sub-scan direction. The arrangement of the three CCD cell arrays in the sub-scan direction causes time lags in detecting different color components in one pixel on the CCD image sensor 27. Then, a delay circuit is provided for delaying the detection time of photometry signals of three color components in accordance with the color component. Thereby, photometry signals of three color components of respective pixels are output from the CCD cell arrays to the image data processing device 12 at the same moment.

The focusing means 29 is comprised of the image data processing device 12, the CCD image sensor 27, the focusing motor 28 and a driver 30 for driving the focusing motor 28. The focusing operation of the focusing lens unit 26 is performed by driving the focusing motor 28 based on image data from the image data processing device 12.

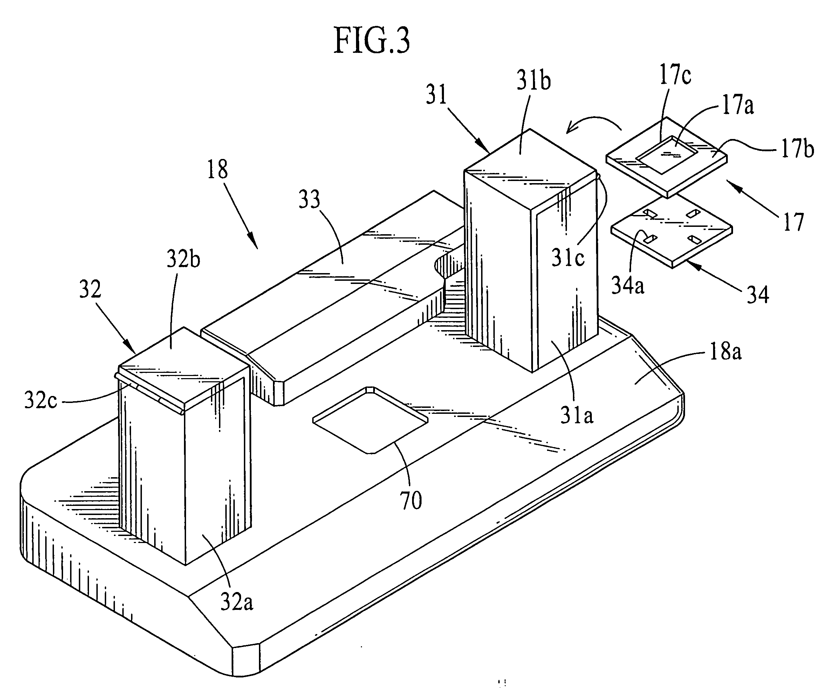

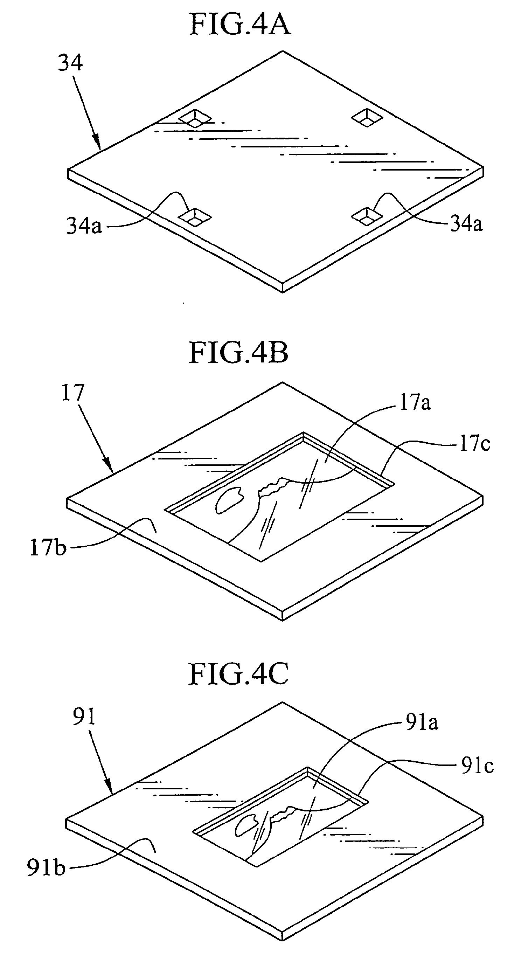

In FIG. 3, the film carrier 18 is comprised of a carrier body 18a, a mount supply cartridge 31 and a mount collection cartridge 32. The carrier body 18a has a housing 33 for covering motors , clutches and so forth. A console panel is equipped with the carrier body 18a, and through the operation of the console panel, an image in the slide mount 17 is scanned through a scan opening 70 formed in the middle of the carrier body 18a. In FIGS. 4B, 4C, the slide mounts 17, 91 for loading a reversal photo film 17a of ISO 135 type and a reversal photo film 91a of IX240 type are depicted. The slide mounts 17, 91 have frame bodies 17b, 91b for holding the periphery of the photo films 17a, 91a, and windows 17c, 91c for exposing images on the photo films 17a, 91a. In this embodiment, the slide mount 17 for ISO 135 type photo film is applied.

The mount supply cartridge 31 and the mount collection cartridge 32 have hollowed rectangular parallelepiped shapes which are identical with each other. The mount supply cartridge 31 has a cartridge body 31a and a mount loading door 31b. The mount collection cartridge 32 has a cartridge body 32a and a cartridge unloading door 32b. The cartridge bodies 31a, 32a have a gutter shape formed from transparent synthetic resin. The bottom portions of the mount supply and collection cartridges 31, 32 are respectively fit into a mount supply cartridge loading portion 31d and a mount collection cartridge loading portion 32d, which are provided in the carrier body 18a. Click retention mechanisms are provided in the mount supply and collection cartridge loading portions 31d, 32d, to prevent dislocation of the cartridges 31, 32 out of the film carrier 18. The mount loading and unloading doors 31b, 32b are mounted on the upper portions of the cartridge bodies 31a, 32a via hinge portions 31c, 32c, and are rotatable between open positions and close positions. In open positions, one lateral sides and top sides of the cartridge bodies 31a, 32a are open for loading/unloading the slide mounts 17.

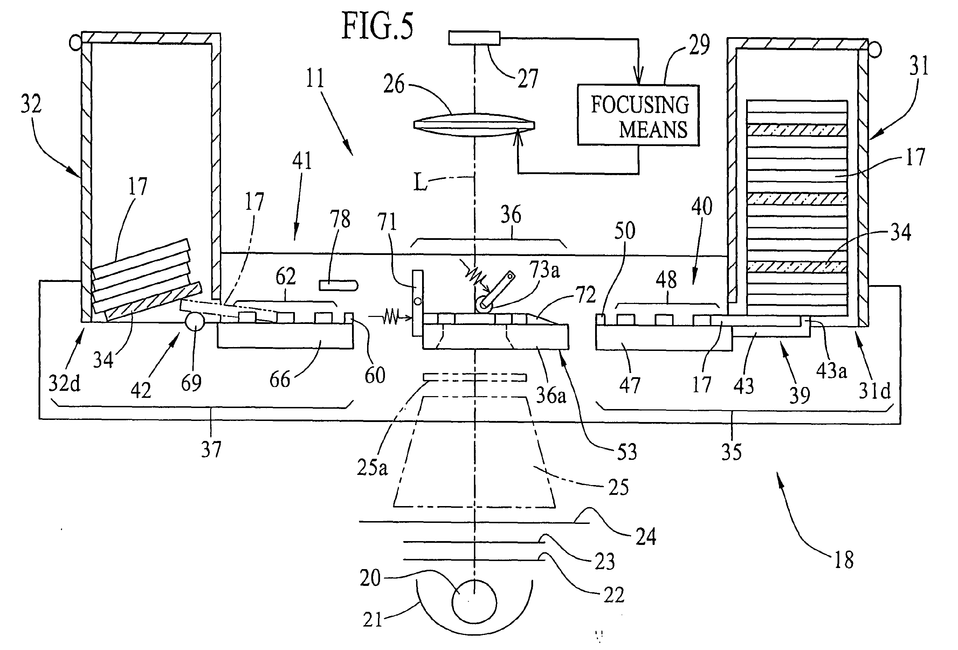

About 50 - 70 sheets of slide mounts 17 and sort cards 34, depend on the thickness thereof, can be stacked in the mount supply and collection cartridges 31, 32. In the bottom side of the mount supply and collection cartridges 31, 32, there are gateways of the slide mounts 17, and openings for allowing insertion of a transfer claw 43a and a mount drawing roller 69 (see FIG. 5).

The sort card 34 is loaded in the mount supply and collection cartridges 31, 32 for dividing plural slide mounts 17 for each order. The sort card 34 is made from a light-tight plastic plate, and has a top surface of square shape with the side 50 millimeters long. The sort card 34 has the same shape as the slide mount 17, and has different color from the slide mount 17 for the purpose of distinction by an operator. As shown in FIG. 4A, four identification openings 34a are formed through the sort card 34 for detecting the sort card 34 by use of a sensor. The rectangular shaped identification openings 34a are positioned in the middle portion of all sides of the sort card 34, so the identification openings 34a are located at same positions even when the sort card 34 is loaded in the incorrect orientation direction or turned turned over.

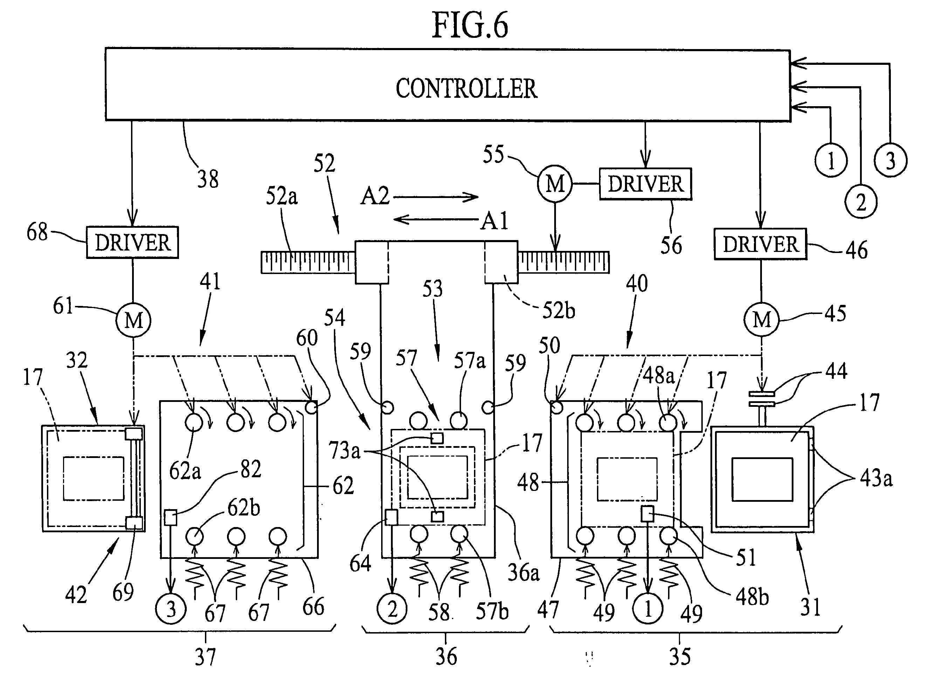

In FIGS. 5, 6, the film carrier 18 includes a mount supply unit 35, a mount holder 36, a mount collection unit 37 and a controller 38. The mount holder 36, corresponded to a movable stage of the present invention, is shiftable in the sub-scan direction, which is perpendicular to the scan light axis L. The image on the photo film 17a is scanned by the CCD image sensor 27 while the mount holder 36 is moved in an advancing direction A1 or a reverse direction A2.

The mount supply unit 35 includes the supply cartridge loading portion 31d, a mount separation section 39 and a mount transfer section 40. The mount supply unit 35 feeds the slide mount 17 to the mount holder 36 one by one. The mount collection unit 37 includes a collection cartridge loading portion 32d, a mount drawing section 41 and a mount collection section 42. The mount collection device 37 receives the slide mount 17 from the mount holder 36, and stores the slide mounts 17 in the mount collection cartridge 32.

The mount separation section 39 has a transfer plate 43, which is connected to a feeding motor 45 via a pair of clutches 44. The feeding motor 45 is controlled by a controller 38 through a driver 46. When a cam (not shown) makes one revolution by the feeding motor 45 after the clutches 44 are engaged with each other, the transfer plate 43 is reciprocated in the sub-scan direction. The feeding plate 43 is provided with two transfer claws 43a, which are projected upward by a length approximately the same as the thickness of the slide mount 17. The transfer claws 43a come in contact with the trailing end of the lowermost slide mount 17. While the transfer plate 43 makes one reciprocation, the transfer claws 43a pushes the slide mount 17 toward the mount transfer section 40.

The mount transfer section 40 has a support plate 47, three feeding roller pairs 48, a connection gear 50, and a first and second photo sensors 51, 63. Each of the feeding roller pairs 48 are comprised of a capstan roller 48a and a pinch roller 48b which are mounted on the support plate 47 in rotatable manners. The capstan roller 48a is disposed so as to come in contact with the one lateral side of the slide mount 17, and is rotated in the clockwise direction by the rotation movement transmitted from the feeding motor 45 via a timing belt (not shown). The pinch roller 48b is biased by a tension coil spring 49 toward the mount feeding roller 48a, and presses the other lateral side of the slide mount 17. Thereby, the slide mount is conveyed toward the mount holder 36 by the capstan roller 48a and the pinch roller 48b.

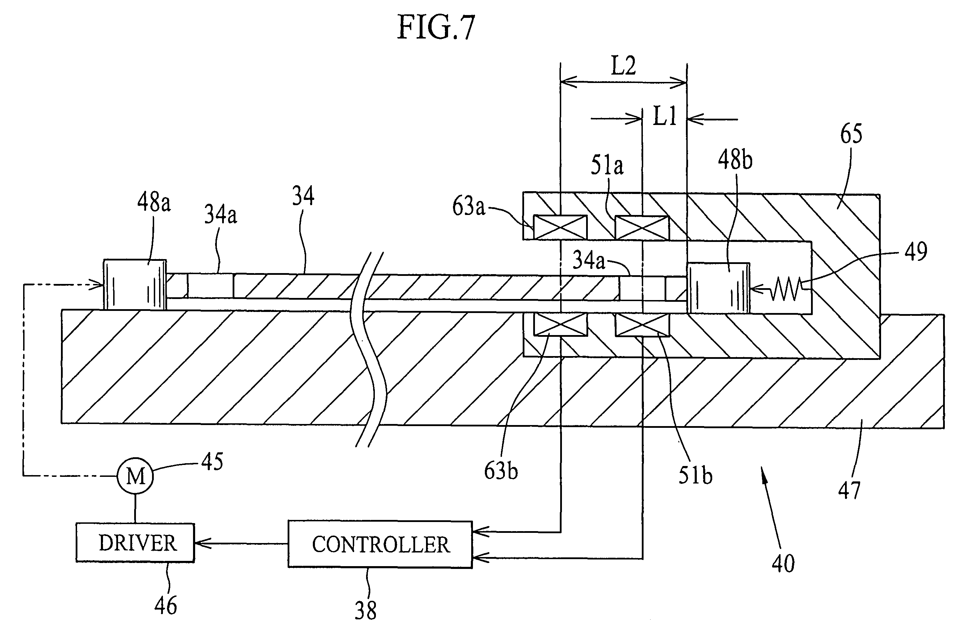

As shown in FIG. 7, the first photo sensor 51 for detecting the identification hole 34a is comprised of a projector 51a and a light receiver 51b, which are respectively fixed in an upper portion and a lower portion of a sensor holder 65. Detection light for detecting the identification hole 34a is emitted from the projector 51 toward the light receiver 51b. The sensor holder 65, mounted on the support plate 47, has a U-shaped cross section and covers one lateral end portion of the slide mount 17. The projector 51a and the light receiver 51b of the first photo sensor 51 are located at positions where the centers thereof are a length L1 apart from one lateral end of the slide mount 17. In this embodiment, the length L1 is set to be 3.8 mm. Output signal from the first photo sensor 51 is sent to the controller 38 for detection of the sort card 34.

The second photo sensor 63 for detecting the orientation direction of the slide mount 17 includes a projector 63a and a light receiver 63b, which are fixed in an upper portion and a lower portion of the sensor holder 65. The projector 63a and the light receiver 63b of the second photo sensor 63 are located at positions where the centers thereof are a length L2 apart from one lateral end of the slide mount 17. In this embodiment, the length L2 is set to be 10.8 mm. Output signal from the second photo sensor 63 is sent to the controller 38.

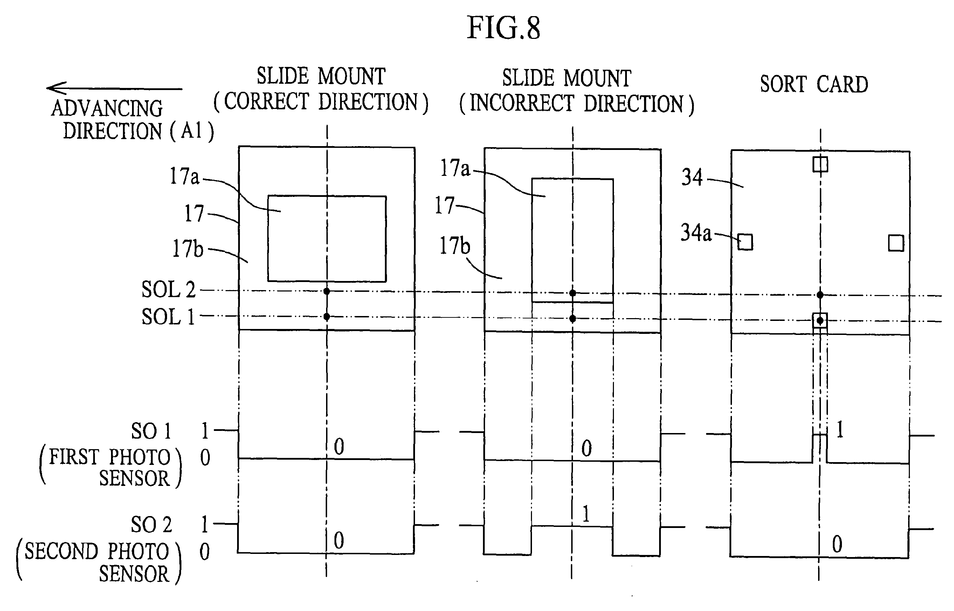

FIG. 8 shows the transition of output signals from the first and second photo sensors 51, 63. When the middle of the sort card 34 with respect to the advancing direction A1 passes the first photo sensor 51, detection light from the projector 51a reaches the photo receiver 51b through the identification opening 34a, and output signal SO1 of "1" is sent to the controller 38. On the other hand, in conveyance of the slide mount 17, detection light from the projector 51a is shielded by the frame body 17b of the slide mount 17, and output signal SO1 of "0" is sent to the controller 38.

When the middle portion of the slide mount 17 with correct orientation direction passes the second photo sensor 63, detection light from the projector 63a is shielded by the frame body 17b of the slide mount 17, and output signal SO2 of "0" is sent to the controller 38. On the other hand, in case of the slide mount 17 with incorrect orientation direction, detection light from the projector 63a reaches the photo receiver 63b through the photo film 17a, and output signal SO2 of "1" is sent to the controller 38.

Accordingly, the controller 38 can detect the sort card 37 by detecting output signals SO1 of "1" and SO2 of "0". Moreover, the controller 38 can detect the slide mount 17 with right orientation direction by output signals SO1 of "0" and SO2 of "0", and detect the slide mount 17 with incorrect orientation direction by output signals SO1 of "0" and SO2 of "1". Thereby, it is possible to detect not only whether the slide mount 17 or the sort card 34 is conveyed, but also whether the slide mount 17 is oriented in the correct direction.

The mount holder 36 has a holder body 36a, a holder moving mechanism 52, a mount feeding section 53 and a mount positioning section 54. The holder moving mechanism 52 is comprised of a rotatable screw rod 52a and a nut portion 52b. The nut portion 52b is provided with one lateral end of the holder body 36a. The screw rod 52a is screwed into the nut portion 52b, and is rotated by the rotation of the scan motor 55, which is driven by the controller 38 through a driver 56. Rotation movement of the screw rod 52a slides the nut portion 52a, so the mount holder 52 is movable between a receive position to come close to the mount supplying device 35 for receiving the slide mount 17 therefrom, and a transfer position to come close to the mount collection device 37 for transferring the slide mount 17 thereto.

In this embodiment, the image on the photo film 17a is pre-scanned at a low resolution during the first conveyance of the mount holder 36 in the advancing direction, shown by the arrow A1 of FIG. 6, toward the mount collection cartridge 32. Then, the image is fine-scanned at a resolution higher than that in the pre-scan during the second conveyance of the mount holder 36 in the advancing direction. Between the pre-scan and the fine-scan, the holder body 36a is conveyed in the reverse direction shown by the arrow A2 of FIG. 6. When the center of the image on the photo film 17 is overlapped with the scan light axis L during the conveyance of the mount holder 36 in the reverse direction A2 , the controller 38 stops conveyance of the mount holder 36, and performs focusing operation.

In the course of conveyance of the mount holder 36 in the reverse direction A2 between the pre-scan and the fine-scan, the controller 38 performs a set-up calculation for detecting an ideal scan condition in the fine-scan on the basis of the image data obtained by the pre-scan. If necessary, a positive simulation image may be displayed in the image data processing device 12 after the set-up calculation. In that case, an operator can monitor the simulation image and input correction data for correcting the characteristics of the image, such as density and hue. By performing the set-up calculation, displaying the simulation image and inputting correction data during the time required for focusing operation, efficient image processing can be realized.

It is possible to omit the processes to display the simulation image or to input correction data, if necessary. That is, the controller 38 may have three selectable operation modes, a first operation mode not to display the simulation image and input correction data, a second operation mode to carry out only the simulation image displaying, and a third operation mode to display the simulation image and input correction data. These three modes are selected by an external operation by an operator.

The controller 38 can control the rotation speed of the scan motor 55 as well as rotation direction thereof. The controller 38 controls the scan motor 55 such that the mount holder 36 is moved at a speed Vp during the pre-scan, at a speed Vm during the reverse conveyance, and at a speed Vf during the fine-scan. The pre-scan speed Vp is determined to be faster than the fine-scan speed Vf, and slower than the reverse speed Vf.

The mount feeding section 53 and the mount positioning section 54 are provided on the holder body 36a. The mount feeding section 53 is comprised of two pairs of feeding roller pairs 57 arranged along the sub-scan direction. The feeding roller pairs 57 includes a capstan roller 57a and a pinch 57b, in the same way as the feeding roller pair 48 of the mount supply device 35. The pinch roller 57b is biased by a tension coil spring 58 toward the capstan roller 57a, and presses the one lateral side of the slide mount 17 or the sort card 34. Two secondary gears 59 are provided on both end portions of the holder body 36a with respect to the sub-scan direction, and are connected with the capstan rollers 57a. When the mount holder 36 is at the receive position, the secondary gear 59 of the mount supply unit side is engaged with the connection gear 50, to transmit the rotation movement of the feeding motor 45 to the capstan rollers 57a of the mount feeding section 53. Thus, the slide mount 17 is transferred to the mount holder 36 form the mount transfer section 40.

When the mount holder 36 is at the ejection position, the secondary gear 59 of the mount collection unit side is engaged with a connection gear 60 of the mount drawing section 41, to transmit the rotation movement of a collection motor 61 to the capstan rollers 57a of the mount feeding section 53. Thus, the slide mount 17 is transferred to the mount drawing section 41 from the mount holder 36.

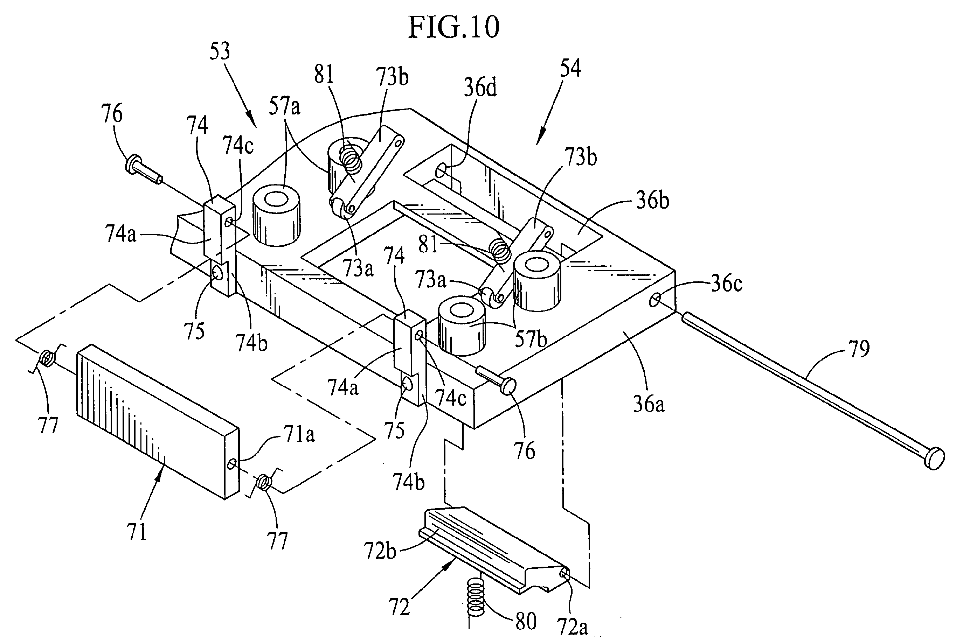

The mount positioning section 54 for holding the slide mount 17 is comprised of a mount positioning plate 71, a mount holding member 72 and a mount pressing roller 73a. As shown in FIG. 10, the positioning plate 71 is provided on the end of the downstream side of the holder body 36a, and has a pair of holes 71a in the middle portion of both lateral sides. A pair of brackets 74 are screwed on the front side of the holder body 36a by a pair of screws 75. The bracket 74 includes a bracket body 74a, a retention portion 74b and a hole 74c. A pair of fixation pins 76 are inserted into the holes 71a, 74c, so that the mount positioning plate 71 is held between the brackets 74. The mount positioning plate 71 is swingable about the fixation pins 76 between a insertion position to hold the leading end of the slide mount 17 and a retract position to be away from the passage of the slide mount 17.

A pair of torsion coil springs 77 are attached by the fixation pins 76 between the mount positioning plate 71 and the brackets 74. One distal end of the torsion coil spring 77 is hooked on the mount positioning plate 71, and the other distal end of the torsion coil spring 77 is hooked on the bracket 50. Thus, the mount positioning plate 71 is biased toward the insertion position where the lower end thereof comes in contact with the front side of the holder body 36a, and regulates the movement of the slide mount 17 on the holder body 36a.

In FIG. 5, the film carrier 18 has an release member 78, which pushes one end portion of the mount positioning plate 71 when the mount holder 36 reaches the ejection position. Then, the mount positioning plate 71 rotates in the clockwise direction toward the retract position, to allow the slide mount 17 to move in the advancing direction A1 beyond the holder body 36a.

In FIG. 10, the mount holding member 72 is comprised of a hole 72a and a retention portion 72b. The mount holding member 72 is contained in a storage opening 36b which is formed in the upstream side of the holder body 36a. The holder body 36a has a pair of holes 36c, 36d for inserting a shaft 79. The shaft 79 is inserted in a holes 72a, 36c, 36d to hold the mount holding member 72 in a swingable manner. And the mount holding member 72 is swingable about the shaft 79 between an insertion position where the upper portion thereof is projected from the upper surface of the holder body 36a by a height about the thickness of the slide mount 17, and a retract position where the mount holding member 72 comes into the holder opening 36b of the mount holder 36 completely.

One distal end of a tension coil spring 80 is fixed on the bottom side of the mount holding member 72 near the retention portion 72b. And the other distal end of the tension coil spring 80 is fixed on the inner bottom wall of the storage opening 36b. The tension coil spring 80 is kept inside of the storage opening 36b in a shrunk manner, so the mount holding member 72 is usually biased toward the insertion position.

When the slide mount 17 is conveyed to the mount holder 36, the mount holding member 72, located at the insertion position, is pressed down toward the retract position by the leading end of the slide mount 17, so that the slide mount 17 can make further movement in the advancing direction A1. When the leading end of the slide mount 17 contacts the mount positioning plate 71, the slide mount 17 is away from the mount holding member 72, which is moved to the insertion position by the bias of the tension coil spring 80. Then, the slide mount 17 is kept stationary between the mount positioning plate 71 and the mount holding member 72.

The mount pressing roller 73a is rotatably attached in one end portion of an arm member 73b. The arm member 73b is swingable around the other end portion thereof. While being fed on the holder body 36a, the slide mount 17 contacts the mount pressing roller 73a which is rotated subsidiary to the movement of the slide mount 17. A tension coil spring 81 biases the arm portion 73b downward, so the slide mount 17 is pressed on the upper surface of the holder body 36a by the bias of the tension coil spring 81. Thus, it is possible to prevent the slide mount 17 from being away from the holder body 36a during the transfer from the mount supply unit 35.

A third sensor 64 is provided in a downstream side of the mount holder 36, and is connected to the controller 38. The third sensor 64 detects whether the slide mount 17 is held at a holding position on the mount holder 36 between the mount positioning plate 71 and the mount holding member 72. When the slide mount 17 is kept stationary at the holding position, the third sensor 64 sends a detection signal to the controller 38, which stops the rotation of the scan motor 55.

The mount drawing section 41 has the same structure as the mount transfer section 40, and includes a support plate 66 and three feeding roller pairs 62. Each of the feeding roller pairs 62 are comprised of a capstan roller 62a and a pinch roller 62b which are mounted on the support plate 66 in rotatable manners. The capstan rollers 62a are disposed so as to contact the one lateral side of the slide mount 17, and rotates in the clockwise direction by the rotation movement transmitted from the collection motor 61 via a timing belt (not shown). Rotation of the collection motor 61 is controlled by the controller 38. The pinch rollers 62b are biased by tension coil springs 67 toward the capstan rollers 62a, and press the other lateral side of the slide mount 17. Thereby, the slide mount 17 is conveyed toward the mount collection cartridge 32.

A fourth sensor 82 is provided in the downstream side of the support plate 66. The fourth sensor 82 detects the slide mount 17 after the slide mount 17 is completely transferred to the mount collection unit 37 from the mount holder 36, and sends the detection signal to the controller 38.

In the collection cartridge loading portion 32d is provided a mount drawing roller 69, which comprises a mount collection section 42. Rotation of the mount drawing roller 69 is controlled by the controller 38 through the collection motor 61 and the driver 68. The bottom surface of the slide mount 17, fed from the mount drawing section 41, comes in contact with the mount drawing roller 69, which pulls the slide mount 17 inside of the mount collection cartridge 32.

Respective sections for comprising the image scan apparatus 13 is controlled by the controller 38 based on the signals from the console panel, the first and second photo sensors 51, 63, the third and fourth sensors 63, 65, and so forth. Under the control of the controller 38, the slide mounts 17 and the sort cards 34 are drawn out of the mount supply cartridge 31 one by one, to scan the image on the photo film 17a. And the controller 38 controls the mount holder 36 and the mount collection device 37 to convey the scanned slide mount 17 toward the mount collection cartridge 32.

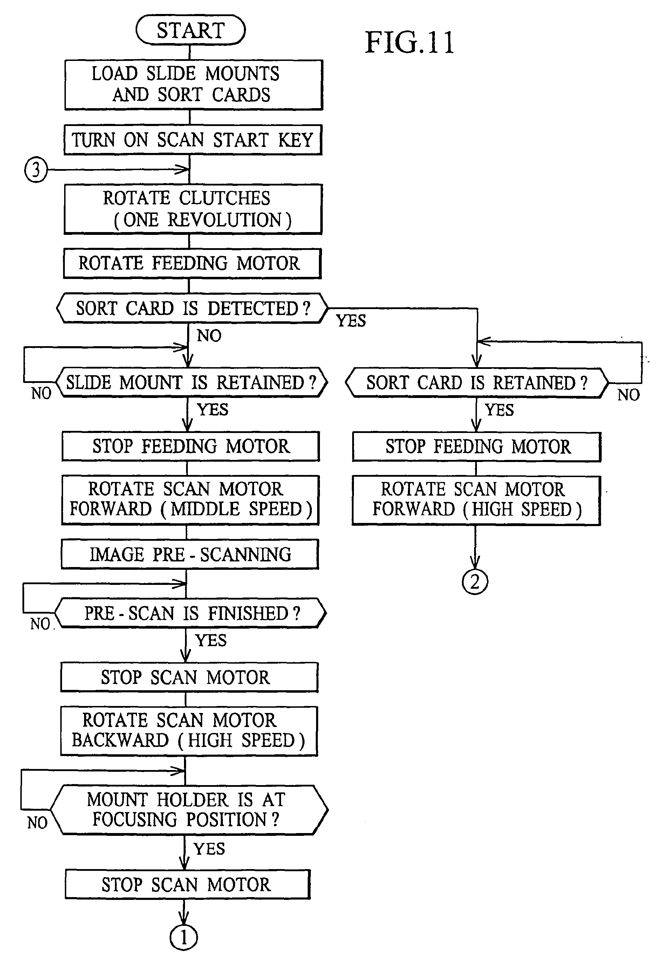

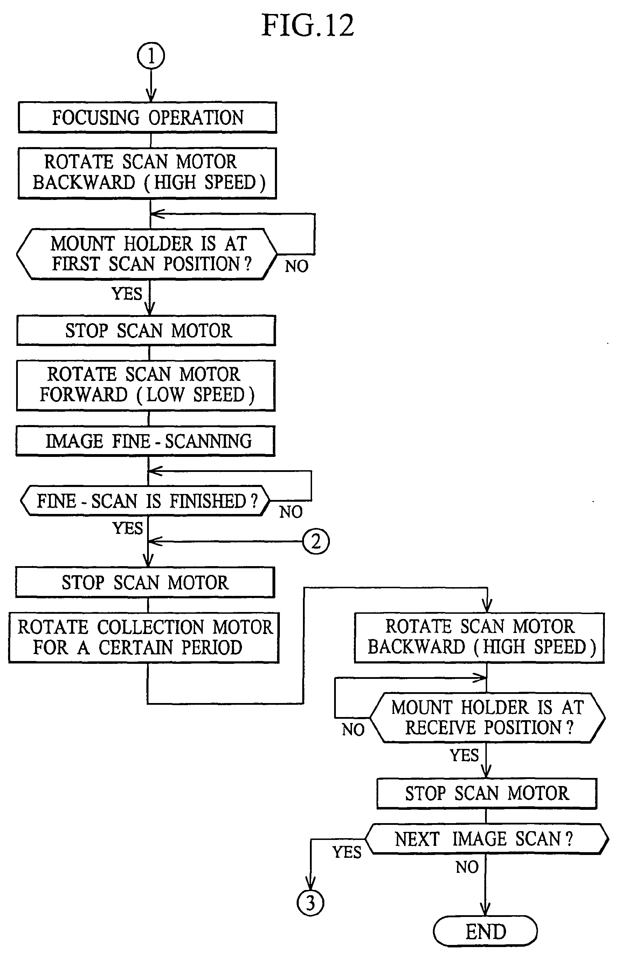

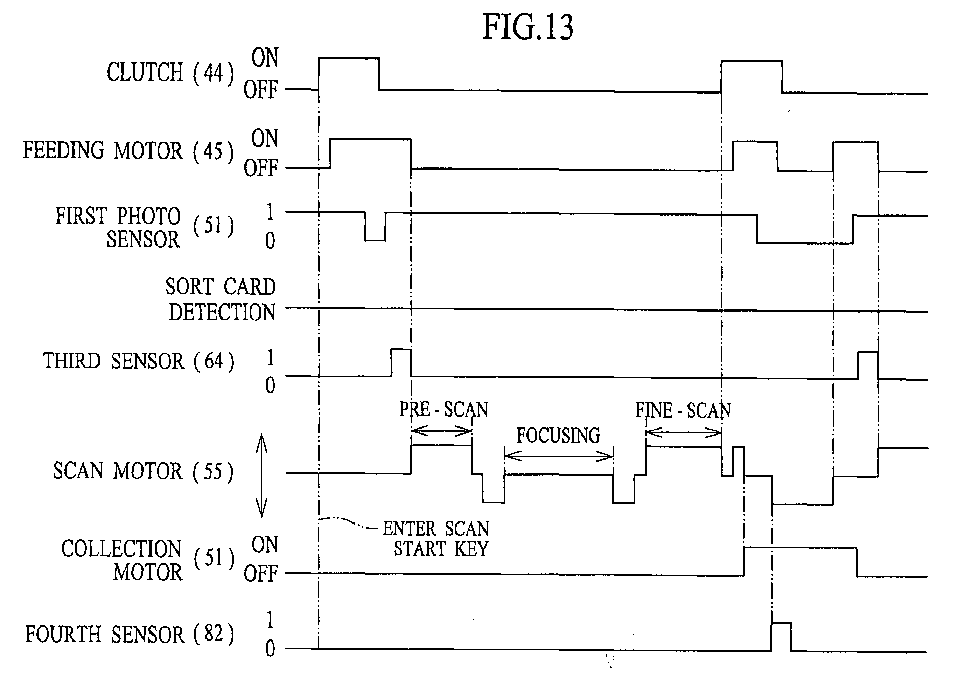

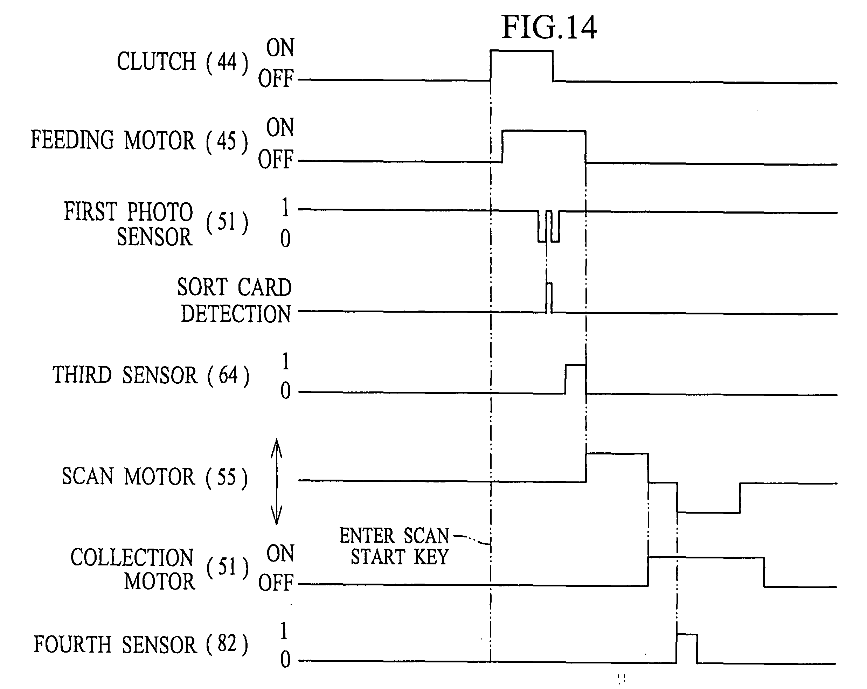

Next, referring to the flow charts and time charts shown in FIGS. 11 to 14, the operation of the above structure will be mentioned. At first, a plurality of slide mounts 17 are divided by the sort card 34 for each order and stacked inside of the mount supply cartridge 31. Then, the mount supply cartridge 31 is fit into the supply cartridge loading portion 31d of the carrier body 18a, and the mount collection cartridge 32 with no slide mount is fit into the collection cartridge loading portion 32d.

When the scan start key in the console panel is operated, the feeding motor 45 is driven to move the transfer plate 43 in the advancing direction after connecting the clutches 44. Then, the transfer claws 43a come in contact with the trailing end of the lowermost slide mount 17 in the mount supply cartridge 31. The slide mount 17 is fed to the mount transfer section 40, nipped by the feeding roller pairs 48 of the mount transfer section 40, and conveyed to the mount holder 36. The mount holder 36 is located at the receive position where the secondary gear 59 is connected with the connection gear 50 of the first feeding section 40, so the rotation movement of the feeding motor 45 is transmitted to the feeding roller pairs 57 of the mount feeding section 53. Thereby, the slide mount 17 is fed in the advancing direction A1 on the mount holder 36.

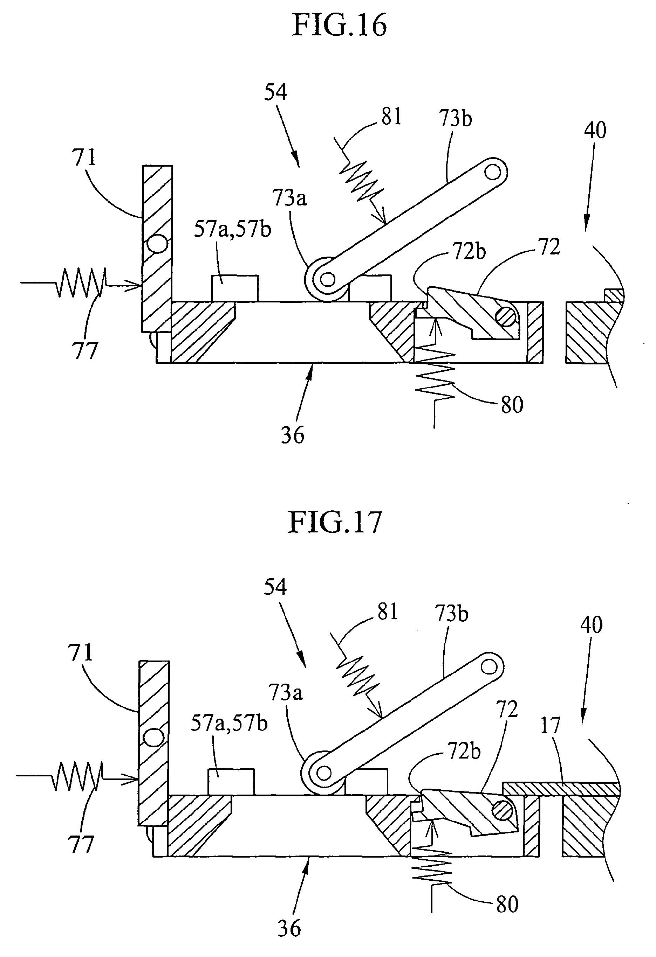

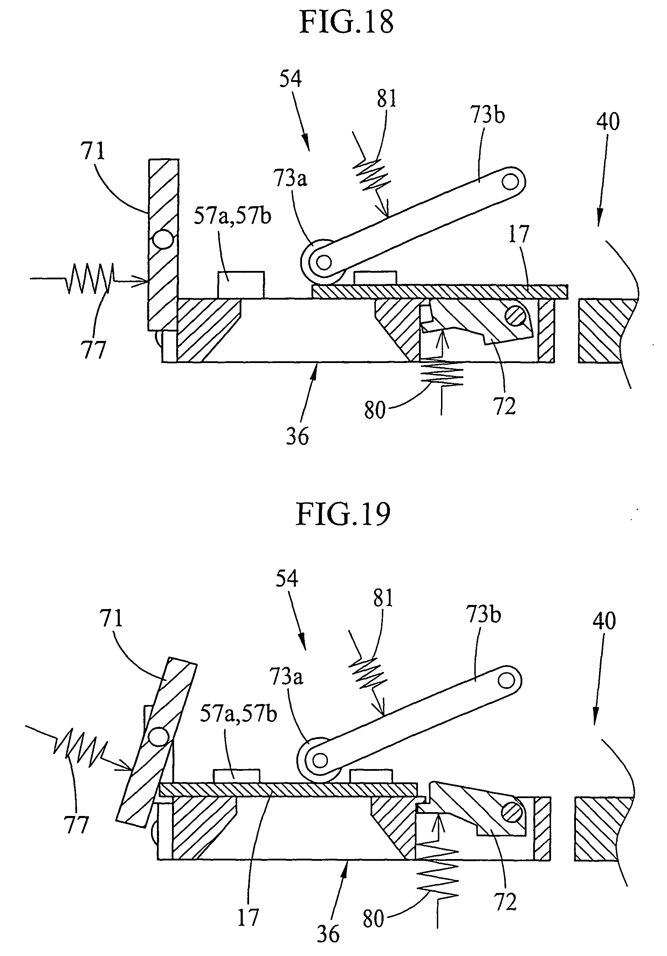

As shown in FIG. 16, the positioning plate 71 is initially kept at the insertion position by the bias of the torsion coil springs 77. Also the mount holding member 72 is kept at the insertion position by the bias of the tension coil spring 80. In FIG. 17, the slide mount 17, fed from the mount transfer section 40, presses the top surface of the mount holding member 72. During the conveyance of the slide mount 17 on the mount holder 36, the mount holding member 72 is kept at the retract position against the bias of the tension coil spring 80, as shown in FIG. 18. At that time, the pressing roller 73a presses the slide mount 17 to prevent from rising by the bias of the tension coil spring 80.

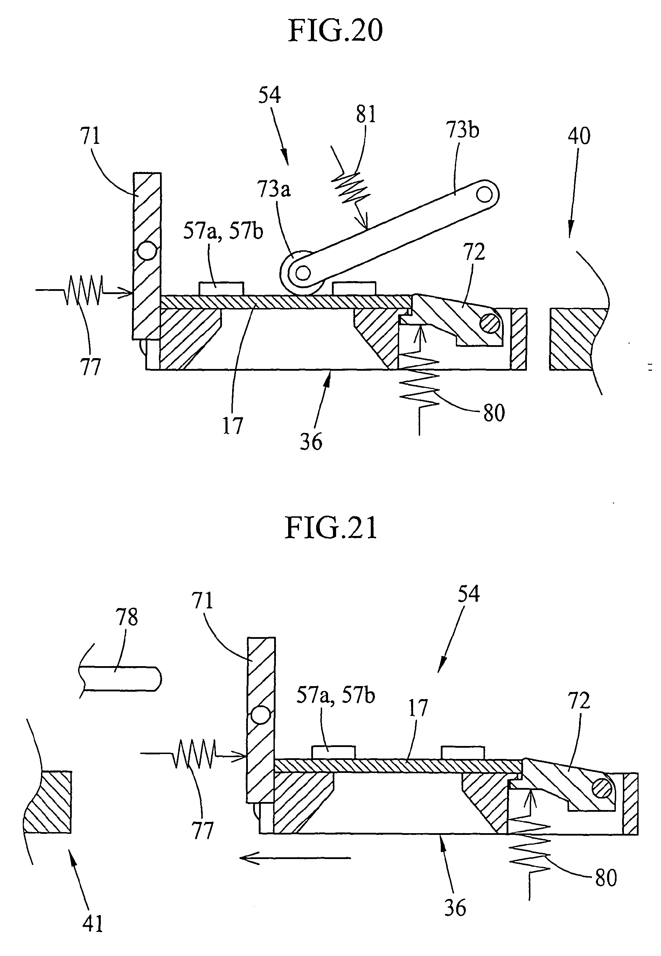

When the slide mount 17 contacts the mount positioning plate 71, the mount holding member 72 is moved back to the insertion position by the bias of the tension coil spring 80, as shown in FIG. 19. The third photo sensor 64 detects the leading end of the slide mount 17 and sends the detection signal to the controller 38, which stops rotation of the feeding motor 45 and the feeding roller pairs 57 of the mount feeding section 53. Then, the mount positioning plate 71 is moved to the insertion position by the biases of the torsion coil springs 77, to move the slide mount 17 in the reverse direction A2. Thereby, the slide mount 17 is held at a position between the positioning plate 71 and the holding plate 72, as shown in FIG. 20.

During the conveyance from the mount supply unit 35 to the mount holder 36, the controller 38 detects the card type based on the detection signal SO1 front the first photo sensor 51. When the identification opening 34a of the sort card 34 is not detected, the controller 38 judges that the slide mount 17 is conveyed, and rotates the scan motor 55 forward at a middle speed. Then, the mount holder 36 with the slide mount 17 is conveyed at the speed Vp from the receive position P1 toward the ejection position P5, as shown in FIG. 15A. During the conveyance of the slide mount 17, the CCD image sensor 27 is driven to scan the image on the photo film 17a line by line at a low resolution. When the mount holder 36 reaches a second scan position P4, the pre-scan is finished.

In FIG. 15A, there are a first scan position P2, a focusing position P3 and the second scan position P4 between the receive position P1 and the ejection position P5. In this embodiment, the first scan position P2 corresponds to the scan start position, and the second scan position P4 corresponds to the scan end position. If the scan direction is reversed, the second scan position P4 corresponds to the scan start position, and the first scan position P2 corresponds to the scan end position.

At the same time as the card type identification, the controller 38 detects the orientation direction of the slide mount 17 on the basis of the detection signal SO2 from the second photo sensor 63. When the slide mount 17 is loaded on the mount holder 36 in the correct orientation direction, the controller 38 sends the scanned image to the image data processing device 12. When the slide mount 17 is loaded in the incorrect orientation direction shown in FIG. 8, on the other hand, the controller 38 enlarges the scan area so as to scan the entire image area of the photo film 17a. After the pre-scan, the controller 38 sends the pre-scanned image data to the image data processing device 12, in which the orientation direction of the pre-scanned image is rotated through 90 degrees to produce the pre-scanned image of a normal format. It is possible to feed the slide mount 17 without scanning the image on the photo film 17a, and to scan the image after the slide mount 17 is loaded in the correct orientation direction.

After the pre-scan is finished, the controller 38 rotates the scan motor 45 backward at high speed, so that the mount holder 36 is conveyed at the speed Vm toward the receive position P1. When the slide mount 17 reaches the focusing position P3 where the center of the image on the photo film 17a is overlapped with the scan light axis L, the controller 38 stops the reverse movement of the mount holder 36. And the controller 38 shifts the focusing lens unit 26 along the scan light axis L through the focusing motor 28, to focus the film image on the photo receive surface of the CCD image sensor 27. After focusing operation, the controller 38 drives the scan motor 45 to convey the mount holder 36 in the reverse direction A2 toward the receive position P1.

When the mount holder 36 reaches the first scan position P2, corresponded to the scan start position, the controller 38 rotates the scan motor 55 forward at low speed. The mount holder 36 is fed in the advancing direction A1 at the speed Vf, during which the controller 38 drives the linear CCD scanner 27 to scan the image on the photo film 17a line by line at a high resolution. The scanned image data is sent to the image data processing device 12 for executing well-known data processes such as gray-balance control and gradation correction, and then converted into print data. The print data is sent to the laser printer section 14, in which the image is recorded in a photographic paper. Recorded photographic paper is forwarded to the processor section 15, in which the positive image is developed to obtain a print picture.

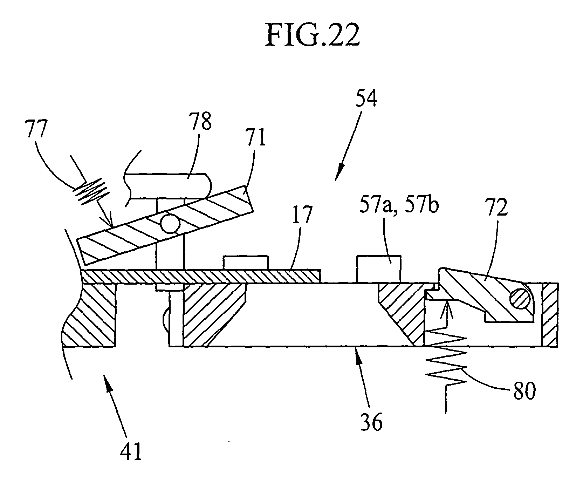

After the fine-scan, the scan motor 45 rotates forward at the high speed. Holding the slide mount 17 between the mount positioning plate 71 and the mount holding member 72 , the mount holder 36 is conveyed in the advancing direction A1 at the speed Vm, as shown in FIG. 21. When the mount holder 36 is moved to the ejection position P5, the controller 38 stops the scan motor 45 and rotates the collection motor 61. The release member 78 pushes one end of the mount positioning plate 71, which is rotated in the clockwise direction against the biases of the torsion coil springs 77, as shown in FIG. 22. Then, the mount positioning plate 71 is moved to the retract position, to allow movement of the slide mount 17 in the advancing direction A1.

The rotation movement of the collection motor 61 is transmitted to the feeding roller pairs 57 of the mount feeding section 53 via the connection gear 60 and the secondary gear 59. The slide mount 17 is conveyed to the mount collection device 37 from the mount holder 36. When the slide mount 17 is completely fed to the mount collection device 37, the detection signal of the fourth sensor 82 is sent to the controller 38. Then, the controller 38 drives the scan motor 45 to convey the mount holder 36 in the reverse direction A2 toward the receive position P1 at the speed Vm. On the other hand, the slide mount 17 is drawn into the mount collection cartridge 32 by the rotation of the mount drawing roller69

While the slide mount 17 is conveyed to the mount collection device 37, the controller 38 detects the existence of next slide mount 17 to be scanned in the mount supply cartridge 31. When another slide mount 17 is exist, the clutches 44 and the feeding motor 45 are actuated to move the lowermost slide mount 17 in the mount supply cartridge 31 to the mount transfer section 40. When the next slide mount 17 reaches the mount transfer position, the feeding motor 45 stops the rotation until the mount holder 36 comes to the receive position P1. Thereafter, the feeding motor 45 is actuated again, and transfers the slide mount 17 to the mount holder 36.

In the pre-scan, the focusing lens unit 26 is kept at a predetermined initial position. The pre-scan has a purpose not to obtain image data used for printing, but to determine the scan condition for the fine-scan. Thus, a little out of focus in the pre-scan do not have such a trouble in determining the scan condition.

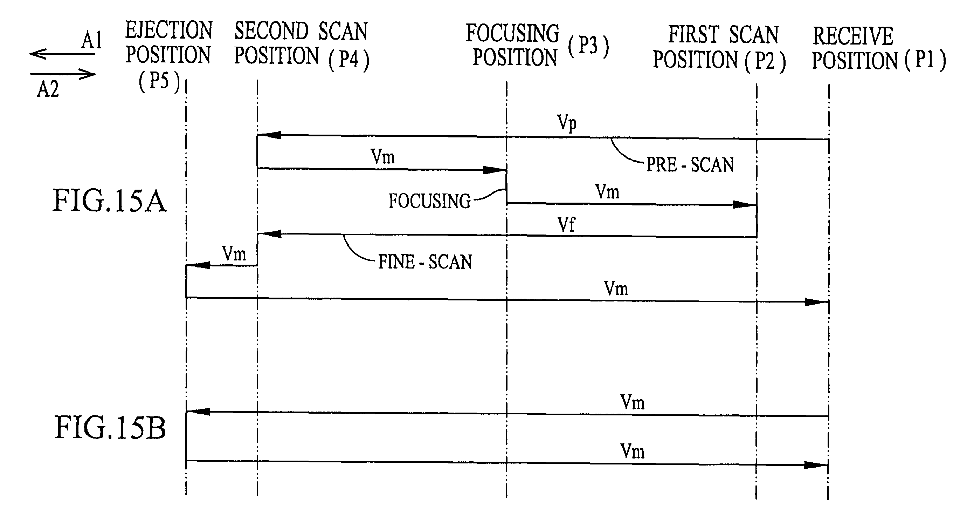

In FIG. 15B, when the identification opening 34a is detected, the controller 38 detects that the sort card 34 is conveyed, and that the slide mounts 17 of one order is completely scanned. After the sort card 34 is transferred to the mount holder 36 which is located at the receive position P1, the controller 38 rotates the scan motor 55 forward at high speed. The mount holder 36 with the sort card 34 is conveyed at the speed Vm in the advancing direction A1 without executing the pre-scan and the fine-scan. When the mount holder 36 reaches the ejection position P5, the collection motor 61 is actuated to rotate the feeding roller pairs 57 on the mount holder 36 by way of the connection gear 60 and the secondary gear 59. The sort card 34 on the mount holder 36 is transferred to the mount collection unit 41, and then drawn into the mount collection cartridge 32 by the mount drawing roller 69.

The present invention is not limited to the above embodiment shown in FIG. 15A, in which the focusing operation is carried out during the conveyance of the mount holder 36 in the reverse direction A2 between the pre-scan and fine-scans. It is possible to change the sequence of the image scan operation and the feeding direction in performing the pre-scan and the fine-scan.

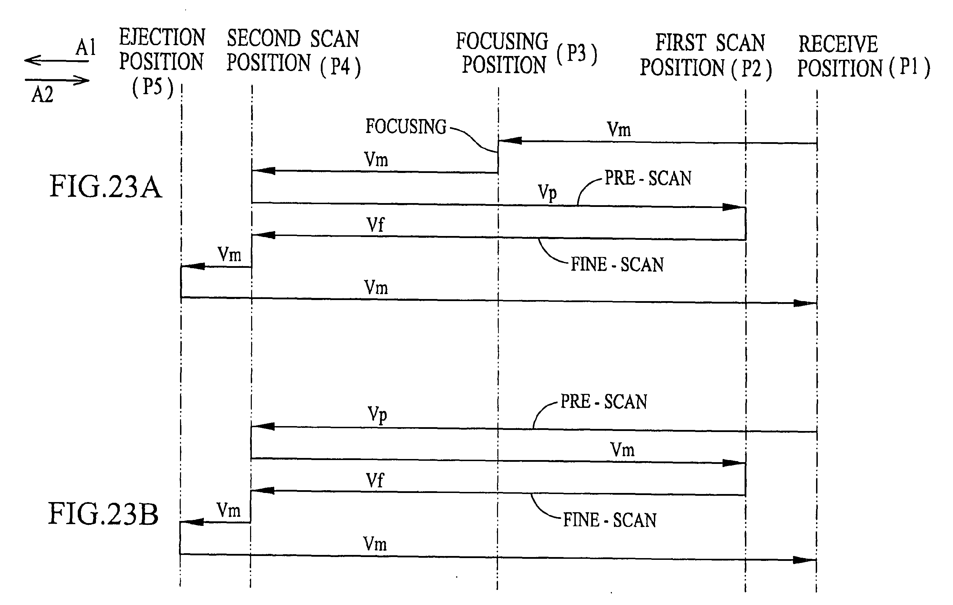

For instance, if the pre-scan image has other purpose than determination of the fine-scan condition, such as obtaining the thumbnail image, the focusing operation may be carried out prior to the pre-scan. In FIG. 23A, the mount holder 36 with the slide mount 17 is conveyed in the advancing direction A1 from the receive position P1 at the speed Vm. At the focusing position P3, the controller 38 stops the mount holder 36 and carries out the focusing operation.

Next, the mount holder 36 is conveyed in the advancing direction A1 at the speed Vm. At the scan end position P4, the mount holder 36 stops, and then moves in the reverse direction A2 at the speed Vp. During the reverse conveyance, the linear CCD scanner 27 is driven to pre-scan the image. After the pre-scan is completed, the mount holder 36, located at the first scan position P2, is fed in the advancing direction A1 at the speed Vf. During the conveyance, the image on the photo film 17a is subjected to the fine-scan. After the fine-scan, the mount holder 36 is conveyed at the speed Vm to the ejection position P5, in which the slide mount 17 is transferred to the mount drawing section 41. Thereafter, the mount holder 36 is conveyed to the receive position P1 at the speed Vm.

In this embodiment, the set-up calculation is rapidly carried out between the pre-scan and the fine-scan. Especially, this sequence is effective in the case where simulation image displaying and correction data inputting processes are omitted.

If the same kind of the slide mounts 17 are used in a single order, it is possible to apply the sequence shown in FIGS. 15A, 23A, only to the first slide mount 17. In scanning the second slide mount 17 or more in the same scan order, the focusing lens unit 26 is fixed at the focused position determined in the pre-scan, as shown in FIG. 23B. The pre-scan is carried out while the mount holder 36 is conveyed from the receive position P1 to the second scan position P4 at the speed Vp. After the mount holder 36 is fed in the reverse direction A2 to the first scan position P2, the fine-scan is carried out during the conveyance of the mount holder 36 in the advancing direction A1. Thereafter, in the same way as the above embodiment, the mount holder 36 moves to the ejection position P5 to transfer the scanned slide mount 17, and is conveyed to the receive position in order to scan the next slide mount 17.

It is also possible to apply the scan operation shown in FIG. 23B if the focusing position is predetermined, or if the focusing lens unit 26 has the deep depth in field so as to compensate the deviation in the thickness of the slide mount 17. In those cases , focusing operation can be omitted by moving the focusing lens unit 26 prior to the pre-scan on the basis of the focusing position information which is measured in advance.

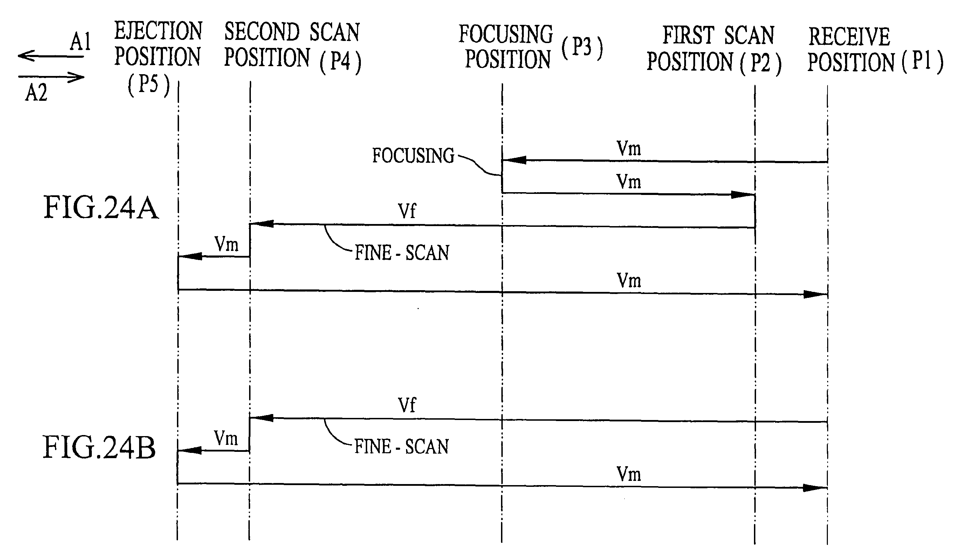

In scanning the photo film of positive type, the pre-scan is not necessary for obtaining a fine-scan image which has fidelity to the photo film 17a. In FIG. 24A, the mount holder 36 moves to the focusing position P3 to perform the focusing operation, and moves back to the first scan position P2. Under the scan condition determined preliminary for the positive photo film, the fine-scan is carried out in moving the mount holder in the advancing direction A1. The pre-scan is omitted to shorten the period of the whole scan operation. When the same kind of the slide mounts 17 are used in a single scan order, it is possible to omit the focusing operation in scanning the second slide mount 17 or more. In FIG. 24B, the fine-scan is carried out to the positive photo film 17a of the second slide mount 17 or more while the mount holder 36 is fed at the speed Vf to the second scan position P4 from the receive position P1. After the fine-scan, the mount holder 36 is conveyed to the ejection position P5, to transfer the scanned slide mount 17 to the mount drawing section 41. And the mount holder 36 moves to the receive position P1 to receive the next slide mount 17.

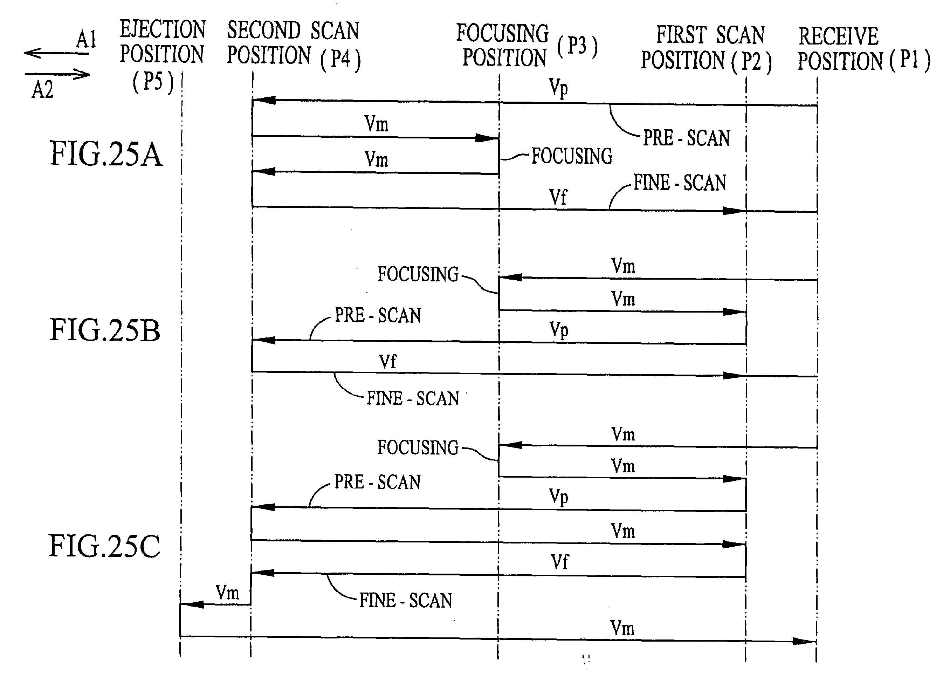

The present invention is also applicable to the case where the slide mount 17 is supplied on the mount holder 36 manually one by one. In that case, the image on the photo film 17a can be scanned in accordance with not only the above described sequences but the following sequences shown in FIGS. 25A to 25C.

As shown in FIG. 25A, the slide mount 17 is pre-scanned while the mount holder 36 is conveyed in the advancing direction A1. When the mount holder 36 reaches the second scan position P4, the mount holder 36 is conveyed back and forth between the second scan position P4 and the focusing position P3, during which the focusing operation is carried out. Then, the fine-scan is performed during the conveyance of the mount holder 36 in the reverse direction A2. FIG. 25B shows an embodiment where the pre-scan and the fine-scans are performed successively after the focusing operation. At first, the mount holder 36 with the slide mount 17 is fed in the advancing direction A1, and fed in the reverse direction A2 after the focusing operation at the focusing position P3. Then, the slide mount 17 is subjected to the pre-scan during the conveyance of the mount holder 36 in the advancing direction A1. When the pre-scan is completed, the mount holder 36 is conveyed in the reverse direction A2 from the second scan position P4 to the first scan position P2, to carry out the fine-scan.

The scanning sequences shown in FIGS. 25A, 25B are completed when the mount holder 36 is returned back to the receive position P1 to which the slide mount 17 is supplied before the scanning sequences. Thus, it is preferable to handle the slide mounts 17.

As shown in FIG. 25C, the mount holder 36 may be subjected to the fine-scan during the conveyance in the advancing direction A2 after the pre-scan of the sequence shown in FIG. 24B. In this embodiment, when the mount holder 36 reaches the second scan position P4 after the pre-scan, the mount holder moves back to the first scan position P1. Then, the fine-scan is carried out while the mount holder 36 is fed in the advancing direction A1 to the second scan position P4. In that case, the slide mount 17 may be ejected at the ejection position P5 which is the opposite to the slide mount supply side. The slide mount 17 may be also ejected to the slide mount supply side after the mount holder 36 moves to the receive position P1.

Instead of the feeding motor 45 and the collection motor 61, a single motor may be provided for moving the slide mount 17 on the first and third mount feeding sections 40, 41. In that case, it is preferable to provide clutches for actuating either the mount supply unit 35 or the mount collection unit 37. In the above embodiment, plural slide mounts are sequentially scanned automatically, but a single scan key may be provided in a console panel to perform the image scan of the single slide mount.

The positions and the shapes of the mount positioning plate 71 and the mount holding member 72 may be changed suitably, as far as each of the mount positioning plate 71 and the mount holding member 72 are movable between the insertion position to hold the slide mount 17 and the retract position to allow movement of the slide mount 17. For instance, the mount positioning plate 71 may be disposed below top surface of the holder body 36a and projected upward to hold the slide mount 17 which is fed from the mount supply device 40.

Instead of the slide mount 17 for the ISO 135 type photo film, the slide mount 91 for IX240 type photo film, shown in FIG. 4C, is also applicable to the present invention. In that case, the second photo sensor 63 is required to be positioned such that the detection light thereof could pass the photo film 91a loaded in the incorrect orientation direction. Moreover, by providing another photo sensor for detecting the passage of the slide mount 91 of IX240 type photo film, it is possible to detect the orientation direction of the slide mounts of both ISO 135 type and IX240 type at the same time.

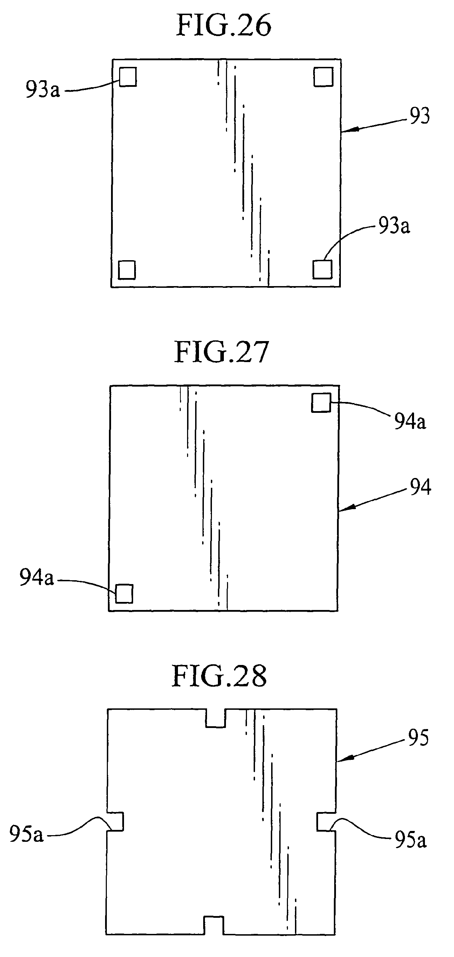

The identification openings 34a may be formed at any positions insofar as the first photo sensor 51 could detect the sort card 34 which is turned over or loaded in the incorrect orientation direction. For example, identification openings 93a may be formed in the corners of a sort card 93, as shown in FIG. 26. It is also possible to form identification openings 94a in both end portions on a single diagonal line of a sort card 94, as shown in FIG. 27. The identification openings 34a, 93a, 94a may have any shapes, such as a circular shape and a rectangular shape.

Instead of the identification openings, a sort card 95 may have notches 95a, as shown in FIG. 28. The identification openings 34a, 93a, 94a and the notches 95a may have any shapes such as a half circle and a triangle. A card identification mark with different reflectance may be recorded on the sort card. The identification mark with different reflectance may be recorded on the sort card. In that case, photo sensors of reflection type are needed for detecting the identification mark.

In the above embodiment, the sensor holder 65 including the first and second photo sensors 51, 63 is provided in one lateral side of the support plate 47. By providing a pair of the sensor holders 65 in both lateral sides, the identification holes 34a can be detected more reliably. Instead of the photo sensors 51, 63 of interrupter type, it is possible to use other type of sensors, such as a light reflection type, mechanical type like a micro switch, and so forth.

The sort card may have bar codes for recording information optically, magnetic recording layers for recording information magnetically, and IC chips for storing information. By detecting these information, it is possible to detect the sort card. By including some useful information such as client information and print conditions can be sent to the image print apparatus 16, it is possible to make ease to perform subsequent processes, such as checking the print picture and the shipment.

The sort card 34 may be formed from the materials having portability and durability, such as a paper and a metal. The size of the sort card 34 may be changed unless a trouble is not occurred in loading the mixture of the slide mounts 17 and the sort cards 34, in discriminating the card type, and in conveyance in the film carrier 18.

In the above embodiment, the sort card 34 is detected on the basis of detection signal at the position where the identification openings 34a are overlapped with the first photo sensor 51, but it is possible to detect the sort card 34 by monitoring the change of the output signal from the first photo sensor 51. It is also possible to stop the slide mount 17 or the sort card 34 at a position where the identification hole 34a is overlapped with the first photo sensor 51, and to detect the output signal from the first photo sensor 51.

Thus, the present invention is not to be limited to the above embodiments, but on the contrary, various modifications are possible to those skilled in the art without departing from the scope of claims appended hereto.

Preferred Embodiments of the Application
1. A method for scanning an image by use of a scanner (27) in conveying a slide mount (17, 91) which holds an original (17a, 91a) with said image, said method characterized by comprising the steps of:
   moving said slide mount (17, 91) and performing a pre-scan to scan said image at a low resolution while said original (17a, 91a) passes a scan position of said scanner (27);
   performing a focusing operation of said scanner (27) when a portion of said original (17a, 91a) is kept at said scan position after said pre-scan; and
   moving said slide mount (17, 91) after said focusing operation and performing a fine-scan to scan said image at a high resolution while said original (17a, 91a) passes said scan position of said scanner (27).
2. A method as claimed in claim 1, further comprising the step of determining scan conditions for said fine-scan in the period between said pre-scan and said fine-scan on the basis of image data obtained by said pre-scan.
3. A method as claimed in claim 2, wherein said pre-scan is carried out in conveyance of said slide mount (17, 91) from a first position to a second position, said focusing operation is carried out while said slide mount (17, 91) is temporarily stopped in the conveyance of said slide mount (17, 91) from said second position to said first position, said slide mount (17, 91) is fed to said first position after said focusing operation, and said fine-scan is carried out in the conveyance of said slide mount (17, 91) from said first position to said second position.
4. A method as claimed in claim 2, wherein said pre-scan is carried out in the conveyance of said slide mount (17, 91) from a first position to a second position, said focusing operation is carried out while said slide mount (17, 91) is temporarily stopped in the conveyance of said slide mount (17, 91) from said second position to said first position, said slide mount (17, 91) is fed to said second position after said focusing operation, and said fine-scan is carried out in the conveyance of said slide mount (17, 91) from said second position to said first position.
5. A method as claimed in one of claims 1 to 4, wherein a sort card (34, 93, 94, 95) for dividing said slide mounts (17, 91) for each order is inserted in a mount cartridge for stacking said slide mounts (17, 91) therein.
6. A method as claimed in claim 5, wherein said focusing operation is performed to only first slide mount (17, 91) after detecting said sort card (34, 93, 94, 95), and said pre-scan and said fine-scan are carried out to second or more said slide mount ( 17 , 91) in the same focusing condition till the detection of next said sort card (34, 93, 94, 95).
7. A method for scanning an image by use of a scanner (27) in conveying a slide mount (17, 91) which holds an original (17a, 91a) with said image, said method characterized by comprising the steps of:
   performing a focusing operation of said scanner (27) when a portion of said original (17a, 91a) is kept at a scan position of said scanner (27);
   moving said slide mount (17, 91) to a first position after said focusing operation;
   performing a pre-scan to scan said image at a low resolution in the conveyance of said slide mount (17, 91) from said first position to a second position; and
   performing a fine-scan to scan said image at a high resolution in the conveyance of said slide mount (17, 91) from said second position to said first position.
8. A method for scanning an image by use of a scanner (27) in conveying a slide mount (17, 91) which holds an original (17a, 91a) with said image, said method characterized by comprising the steps of:
   performing a focusing operation of said scanner (27) when a portion of said original (17a, 91a) is kept at a scan position of said scanner (27);
   moving said slide mount (17, 91) to a first position after said focusing operation;
   performing a pre-scan to scan said image at a low resolution in the conveyance of said slide mount (17, 91) from said first position to a second position;
   moving said slide mount (17, 91) to said first position; and
   performing a fine-scan to scan said image at a high resolution in the conveyance of said slide mount (17, 91) from said first position to said second position.
9. A method as claimed in claim 7 or 8, further comprising the step of determining scan conditions for said fine-scan in the period between said pre-scan and said fine-scan on the basis of image data obtained by said pre-scan.
10. A method as claimed in one of claims 7 to 9, wherein a sort card (34, 93, 94, 95) for dividing said slide mounts (17, 91) for each order is inserted in a mount cartridge for stacking said slide mounts (17, 91) therein.
11. A method as claimed in claim 10, wherein said focusing operation is performed to only a first slide mount (17, 91) after detecting said sort card (34, 93, 94, 95), and said pre-scan and said fine-scan are carried out to a second slide mount (17, 91) or more in the same focusing condition till the detection of next said sort card (34, 93, 94, 95).
12. An apparatus for setting a slide mount (17, 91) with an original (17a, 91a) on a movable stage (36), moves said slide mount (17, 91), and scanning an image in said original (17a, 91a) while said original (17a, 91a) passes a scan position of said scanner (27), said apparatus characterized in comprising:
   a stage moving mechanism (52) for moving said movable stage (36) between a receive position and a collection position;
   a mount supply section (35) for supplying said slide mount (17, 91) to said movable stage (36) which is located at said receive position;
   a mount collection section (37) for receiving said slide mount (17, 91) from said movable stage (36) which is located at said collection position;
   a mount set section (54) for holding said slide mount (17, 91) sent from said mount supply section (35) at a holding position on said movable stage (36);
   a mount ejection section for ejecting said slide mount (17, 91) to said mount collection section (37); and
   a controller (38) for driving said scanner to scan said image while moving said movable stage (36) with said slide mount (17, 91) between said receive position and said collection position back and forth.
13. An apparatus as claimed in claim 12, wherein said controller (38) carries out a pre-scan to scan said image at a low resolution, and a fine-scan to scan said image at a high resolution on scan conditions which is determined based on image data obtained by said pre-scan.
14. An apparatus as claimed in claim 13, wherein said controller (38) carries out said pre-scan in the conveyance of said movable stage (36) to said collection position, stops said movable stage (36) temporarily during the conveyance toward said receive position to carry out a focusing operation of said scanner (27), moves said movable stage (36) to said receive position, and then carries out said fine-scan in the conveyance of said movable stage (36) to said collection position; and
   wherein said controller (38) determines said scan conditions in the period of conveyance of said movable stage (36) to said receive position.
15. An apparatus as claimed in claim 14, wherein said controller (38) displays a simulation image based on said scan condition on a monitor in the period when said movable stage (36) is conveyed to said receive position after said pre-scan.
16. An apparatus as claimed in claim 13, wherein said controller (38) stops said movable stage (36) temporarily in the conveyance toward said collection position to carry out a focusing operation of said scanner (27), carries out said pre-scan in the conveyance of said movable stage (36) to said receive position after conveyance to said collection position, and then carried out said fine-scan in the conveyance of said movable stage (36) to said collection position.
17. An apparatus as claimed in claim 13, wherein said controller (38) stops said movable stage (36) temporarily in the conveyance toward said collection position to carry out a focusing operation of said scanner (27), carries out said pre-scan in the conveyance of said movable stage (36) to said collection position after conveyance to said receive position, moves said moving stage (36) to said receive position, and then carries out said fine-scan in the conveyance of said movable stage (36) to said collection position.
18. An apparatus as claimed in one of claims 14 to 17, wherein said mount set section (54) includes first transmission means (50, 59) for receiving a driving power from said mount supply section (35) at the time when said movable stage (36) is at said receive position, mount feeding means (57) for feeding said slide mount (17, 91) toward said holding position by said driving power from said first transmission means (50, 59), and mount holding means (54) for holding said slide mount (17, 91) at said holding position.
19. An apparatus as claimed in one of claims 14 to 18, wherein said mount ejection means includes second transmission means (59, 60) for transmitting a driving power from said mount collection means (37) to said mount feeding means (57) at the time when said movable stage (36) is at said collection position, and release means (78) for releasing said slide mount (17, 91) when said movable stage (36) is located at said collection position.
20. An apparatus as claimed in one of claims 14 to 19, wherein said mount supply section (35) includes a mount supply cartridge (31) which contains plural said slide mounts (17, 91) stacked therein, mount separation means (39) for pushing lowermost said slide mount (17, 91) in said mount supply cartridge (31) in a direction perpendicular to a stacked direction of said slide mounts (17, 91), and mount transfer means (40) for transferring said slide mount (17, 91) forwarded from said mount supply cartridge (31) to said movable stage (36).
21. An apparatus as claimed in one of claims 14 to 20, wherein said mount collection means (37) includes a mount collection cartridge (32) for containing said slide mounts (17, 91), and mount drawing means (42) for thrusting scanned said slide mount (17, 91) into a lower portion of lowermost said slide mount (17, 91) in said mount collection cartridge (32).
22. An apparatus as claimed in one of claims 14 to 21, further comprising a sort card (34, 93, 94, 95) for dividing plural said slide mounts (17, 91) for each order, and first detection means (51) for detecting the passage of said sort card (34, 93, 94, 95);
   wherein said controller (38) conveys said sort card (34, 93, 94, 95) to said mount collection means (37) without performing said pre-scan and said fine-scan when said sort card (34, 93, 94, 95) is detected.
23. An apparatus as claimed in claim 22, wherein said sort card (34, 93, 94, 95) has identification marks (34a, 93a, 94a, 95a) for distinguishing said sort card (34, 93, 94, 95) from said slide mount (17, 91), said identification marks (34a, 93a, 94a, 95a) are positioned so as to be the same location in said sort card (34, 93, 94, 95) even when sort card (34, 93, 94, 95) is turned over or rotated around 90 degrees from a correct orientation direction.
24. An apparatus as claimed in claim 22 or 23, wherein said controller (38) performs said focusing operation only to first said slide mount (17, 91) after detecting said sort card (34, 93, 94, 95), and performs only said pre-scan and said fine-scan to second or more said slide mount (17, 91) in the same focusing position till the detection of next said sort card (34, 93, 94, 95).
25. An apparatus as claimed in claim 22 or 23 wherein said controller (38) performs said focusing operation only to first said slide mount (17, 91) after detecting said sort card (34, 93, 94, 95), and performs only said fine-scan to second or more said slide mount (17, 91) in the same focusing condition till the detection of next said sort card (34, 93, 94, 95).
26. An apparatus as claimed in one of claims 22 to 25, further comprising second detection means (63) for detecting the orientation direction of said slide mount (17, 91).
27. A film carrier which is assembled in an image scanning apparatus, and conveys a slide mount (17, 91) holding a photo film with an image, said film carrier characterized in comprising:
   a movable stage (36) for holding said slide mount (17, 91);
   a stage moving mechanism (52) for moving said movable stage (36) between a receive position and a collection position;
   a mount supply section (35) for supplying said slide mount (17, 91) to said movable stage (36) which is located at said receive position;
   a mount collection section (37) for receiving said slide mount (17, 91) from said movable stage (36) which is located at said collection position;
   a mount set section (54) for holding said slide mount (17, 91) sent from said mount supply section (35) at a holding position on said movable stage (36); and
   a mount ejection section for feeding said slide mount (17, 91) to said mount collection section (37).
28. A film carrier as claimed in claim 27, wherein said mount set section (54) includes:
   first transmission means (50, 59) for receiving a driving power from said mount supply section (35) at the time when said movable stage (36) is at said receive position;
   mount feeding means (57) for feeding said slide mount (17, 91) toward said holding position by said driving power from said first transmission means (50, 59);
   mount positioning means (71) for contacting a front end of said slide mount (17, 91) to position said slide mount (17, 91) at said holding position; and
   mount holding means (72) for contacting a rear end of said slide mount (17, 91) to hold said slide mount (17, 91) at said holding position together with said mount positioning means (71).
29. A film carrier as claimed in claim 28, wherein said mount ejection means includes a second transmission means (59, 60) for transmitting a driving power from said mount collection means (37) to said mount feeding means (57) at the time when said movable stage (36) is at said collection position, and a release means (78) for releasing said slide mount (17, 91) which is held by said positioning means (71) when said movable stage (36) is located at said collection position.
30. An apparatus as claimed in one of claims 27 to 29, wherein said mount supply section (35) includes a mount supply cartridge (31) which contains plural said slide mounts (17, 91) stacked therein, mount separation means (39) for pushing a lowermost said slide mount (17, 91) out of said mount supply cartridge (31), and mount transfer means (40) for transferring said slide mount (17, 91) forwarded from said mount supply cartridge (31) to said movable stage (36).
31. An apparatus as claimed in one of claims 27 to 30, wherein said mount collection means (37) includes a mount collection cartridge (32) for containing said slide mounts (17, 91), and mount drawing means (42) for pushing scanned said slide mount (17, 91) into said mount collection cartridge (32).
32. A rectangular-shaped sort card (34, 93, 94, 95) which is loaded in an image scanning apparatus and divide plural slide mounts (17, 91) for each order, said slide mount (17, 91) holding a photo film on which an image is recorded, said sort card (34, 93, 94, 95) characterized in comprising plural identification marks (34a, 93a, 94a, 95a) for distinguishing said sort card (34, 93, 94, 95) from said slide mount (17, 91) such that said identification marks (34a, 93a, 94a, 95a) are the same location in said sort card (34, 93, 94, 95) even when sort card (34, 93, 94, 95) is turned over or rotated around 90 degrees from a correct orientation direction.
33. A sort card (34, 93, 94, 95) as claimed in claim 32, wherein said identification marks (34a, 93a, 94a, 95a) are openings which are formed in the middle of all sides of said sort card (34, 93, 94, 95).
34. A sort card (34, 93, 94, 95) as claimed in claim 32, wherein said identification marks (34a, 93a, 94a, 95a) are notches which are formed in the middle of all sides of said sort card (34, 93, 94, 95).
35. A sort card (34, 93, 94, 95) as claimed in claim 32, wherein said identification marks (34a, 93a, 94a, 95a) are openings which are formed in the vicinity of the corners of said sort card (34, 93, 94, 95).
36. A film carrier having a mount supply cartridge (31) for containing said slide mount (17, 91) and said sort card (34, 93, 94, 95) as claimed in one of claims 32 to 35 with said sort card (34, 93, 94, 95) being inserted in each order, mount feeding means for feeding said slide mount (17, 91) or said sort card (34, 93, 94, 95) from said mount supply cartridge (31) one by one, and a mount collection cartridge (32) for containing said slide mount (17, 91) or said sort card (34, 93, 94, 95) from said mount feeding means, said film carrier characterized in comprising first detection means for detecting said identification marks (34a, 93a, 94a, 95a) to distinguish said sort card (34, 93, 94, 95) from said slide mount (17, 91).
37. A film carrier as claimed in claim 36, further comprising second detection means (63) for detecting the orientation direction of said slide mount (17, 91).

## Claims

1. A rectangular-shaped sort card (34, 93, 94, 95) which is loaded in an image scanning apparatus and divide plural slide mounts (17, 91) for each order, said slide mount (17, 91) holding a photo film on which an image is recorded, said sort card (34, 93, 94, 95) **characterized in** comprising plural identification marks (34a, 93a, 94a, 95a) for distinguishing said sort card (34, 93, 94, 95) from said slide mount (17, 91) such that said identification marks (34a, 93a, 94a, 95a) are the same location in said sort card (34, 93, 94, 95) even when sort card (34, 93, 94, 95) is turned over or rotated around 90 degrees from a correct orientation direction.

2. A sort card (34, 93, 94, 95) as claimed in claim 1, wherein said identification marks (34a, 93a, 94a, 95a) are openings which are formed in the middle of all sides of said sort card (34, 93, 94, 95).

3. A sort card (34, 93, 94, 95) as claimed in claim 1, wherein said identification marks (34a, 93a, 94a, 95a) are notches which are formed in the middle of all sides of said sort card (34, 93, 94, 95).

4. A sort card (34, 93, 94, 95) as claimed in claim 1, wherein said identification marks (34a, 93a, 94a, 95a) are openings which are formed in the vicinity of the corners of said sort card (34, 93, 94, 95).

5. A film carrier having a mount supply cartridge (31) for containing said slide mount (17, 91) and said sort card (34, 93, 94, 95) as claimed in one of claims 1 to 4 with said sort card (34, 93, 94, 95) being inserted in each order, mount feeding means for feeding said slide mount (17, 91) or said sort card (34, 93, 94, 95) from said mount supply cartridge (31) one by one, and a mount collection cartridge (32) for containing said slide mount (17, 91) or said sort card (34, 93, 94, 95) from said mount feeding means, said film carrier **characterized in** comprising first detection means for detecting said identification marks (34a, 93a, 94a, 95a) to distinguish said sort card (34, 93, 94, 95) from said slide mount (17, 91).

6. A film carrier as claimed in claim 5, further comprising second detection means (63) for detecting the orientation direction of said slide mount (17, 91).
